Europäisches Patentamt

(19) European Patent Office

Office européen des brevets

(11) EP 0 829 919 A1

(12) **EUROPEAN PATENT APPLICATION**
published in accordance with Art. 158(3) EPC

(43) Date of publication:
18.03.1998 Bulletin 1998/12

(21) Application number: 96914464.1

(22) Date of filing: 28.05.1996

(51) Int. Cl.$^6$: **H01Q 3/08**, H01Q 13/12,
H04B 7/155, H04B 7/08

(86) International application number:
PCT/JP96/01435

(87) International publication number:
WO 96/38876 (05.12.1996 Gazette 1996/53)

(84) Designated Contracting States:
DE ES FR GB IT NL

(30) Priority: 29.05.1995 JP 154019/95
25.04.1996 JP 129169/96

(71) Applicant:
NIPPON STEEL CORPORATION
Tokyo 100 (JP)

(72) Inventors:
• UEMATSU, Masahiro
Nippon Steel Corporation
Tokyo 100 (JP)

• TAKAHASHI, Nobuharu
Nippon Steel Corporation
Tokyo 100 (JP)
• OJIMA, Takashi
Nippon Steel Corporation
Tokyo 100 (JP)
• OCHIAI, Makoto
Nippon Steel Corporation
Tokyo 100 (JP)

(74) Representative:
VOSSIUS & PARTNER
Siebertstrasse 4
81675 München (DE)

(54) **SATELLITE COMMUNICATION DEVICE MOUNTED ON MOBILE BODY**

(57) In a satellite communication apparatus for a vehicle in which a reception antenna (RXAT) and a transmission antenna (TXAT) are separately disposed, with respect to the reception antenna, a closed-loop control based on a radio tracking system is carried out by using a reception level detector (RXDT), a tracking angle calculating unit (CMP), a tracking angle output unit (OUT), a motor driver (RXMD) and a motor (RXMR). With respect to the transmission antenna, there is carried out an open-loop control so as to cause the transmission antenna to track the tracking operation of the reception antenna by using the tracking angle output unit (OUT), a motor driver (TXMD) and a motor (TXMR).

FIG.1

## Description

TECHNICAL FIELD

The present invention relates to a satellite communication apparatus for a movable body used as a satellite communication apparatus to be mounted on a vehicle or the like.

BACKGROUND ART

In order to satisfy an increasing demand of a personal satellite communication which rapidly spreads recently, there is planned an economical personal satellite communication system which makes a direct communication between mobile stations and portable stations possible.

A satellite communication apparatus for a movable body needs a high-speed automatic tracking function. That is, while a satellite to which a communication is made is in substantially the stationary state over the equator, the direction of the movable body is changed hour to hour in accordance with its operation, thereby requiring an automatic tracking function for enabling the antenna body to be constantly directed to the direction of the satellite. In particular to vehicles, as it can be easily understood that a vehicle makes a right turn or a left turn in a crossing, the direction of the vehicle is changed rapidly, and hence the vehicle requires a highly-developed automatic tracking function as compared with other vehicles such as trains, ships or airplanes.

As automatic tracking systems, there are known a radio tracking system having a feedback loop including a level detecting circuit for detecting received radio waves thereby to control the direction of the antenna in the increasing direction of the level of the received radio waves, and an absolute value tracking system in which a latitude and a longitude of a vehicle are detected and the direction of the antenna is controlled by calculating the direction of a geostationary satellite from this detected value.

Although the radio tracking system has an advantage that the absolute position of the vehicle need not be detected, there are required some special devices for avoiding an interference of a shielding material. In the vehicles running on the roads of a city, the satellite is shielded by a building or an overpass, etc. As a result, the radio tracking system has a problem that a temporal tracking-disabled state frequently occurs.

In the case of the vehicles, the antenna is installed within a cabin or a trunk or a roof. Unlike a large bus or truck, the small car has a narrow portion to install the antenna so that the antenna including an automatic tracking function has to be miniaturized. Moreover, the area to which the antenna is attached and the height in which the antenna is attached also should be reduced. There is a limit in miniaturizing the antenna body because a necessary antenna gain should be maintained, and hence the automatic tracking mechanism should be miniaturized.

The present applicant has already filed Japanese patent applications on some inventions concerning a mobile satellite broadcasting reception apparatus which can be suitably mounted on a vehicle and which is compact, high in performance and inexpensive. These patent applications are made laid-open (JP-A-7-106847, etc.). An antenna apparatus used in this mobile satellite broadcasting reception apparatus comprises an antenna body comprised of a leakage waveguide slot array planar antenna having a tilt angle of substantially an average value of an elevation angle of a geostationary satellite as seen from the Japanese Islands and which is installed substantially horizontally and an automatic tracking mechanism for rotating this body portion within the horizontal plane. As described above, by making the tracking of the elevation angle unnecessary, the area and height in which the antenna including the tracking mechanism is attached can be reduced considerably.

When the above-mentioned satellite broadcasting reception antenna is applied to the satellite communication apparatus for a movable body of the above-mentioned personal satellite communication system, the following various problems should be solved.

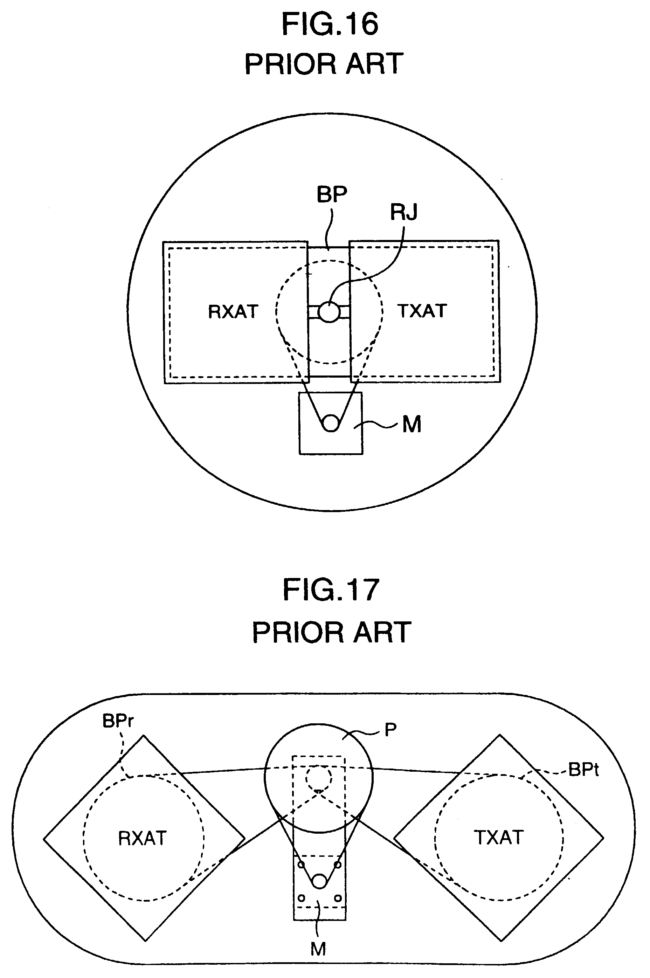

Firstly, in the personal satellite communication system, reception and transmission carrier frequencies are considerably different by substantially 10 GHz. Thus, when the leakage waveguide slot array planar antenna which has been already developed for receiving a satellite broadcasting is applied to a mobile satellite communication apparatus, as shown in FIG. 16 or 17, there are required a reception antenna RXAT and a transmission antenna TXAT each having a tilt angle corresponding to an angle of elevation. Accordingly, in order to avoid the whole of the satellite communication apparatus from being increased, the automatic tracking control from being made complex and the manufacturing cost from being increased when there are installed two transmission and reception antennas, instead of the leakage waveguide slot array planar antenna, it is considered to use antennas of other types such as a planar antenna (e.g. see JP-A-5-7108) in which transmission and reception antennas can be easily made common or parabola antenna.

Secondly, if the above-mentioned satellite broadcasting reception leakage waveguide slot array planar antenna is applied to the mobile satellite communication apparatus of the personal satellite communication system, in order to realize an optimum configuration considering the attachment area on the vehicle, the tracking control accuracy and the manufacturing cost, there still remains a problem of how to arrange automatic tracking mechanisms of a reception antenna and a transmission antenna. As one idea of such configuration, as shown in a plan view of FIG. 16, there is considered a method in which a reception antenna RXAT and a transmission antenna TXAT having tilt angles corresponding to the elevation angles are attached to a common rotary base plate BP, this rotary base plate BP is rotatably supported, and angles (azimuth angles) within the horizontal plane of the rotary base plate BP, accordingly, the azimuth angles of the respective antennas RXAT, TXAT are controlled.

However, in the configuration of FIG. 16, a rotary joint RJ must be formed in somewhere of a feeding line which connects the transmission and reception antennas and a radio apparatus which is in the stationary state. Since the position at which this rotary joint RJ is formed is limited to one point of the rotation center of the rotary base plate BP, the rotary joint should be made common both in transmission and reception. However, since the transmission and reception frequencies are different from each other by 10 GHz, similarly to the case of making the transmission and reception antennas become common, it is difficult to make the rotary joint common in transmission and reception from a technical standpoint.

Therefore, as other configuration, there is considered such one as shown in a plan view of FIG. 17. That is, there is considered a method in which a reception antenna RXAT and a transmission antenna TXAT are attached on different rotary base plates BPr, BPt, respectively, the rotary base plates BPr, BPt are kept rotatable, and azimuth angles of the respective rotary base plates BPr, BPt, accordingly, the respective antennas RXAT, TXAT are kept at the same value by using a common motor M and a pulley P.

However, in the configuration of FIG. 17, since the transmission and reception antennas and a driving apparatus are formed as one body, there is then the problem that the area in which the apparatus is attached to the vehicle increases. In particular, if the vehicle is an automobile, then it becomes difficult to maintain a wide area in an attachment portion such as a roof. Moreover, in the configuration of FIG. 17, when a displacement of azimuth angle occurs between the transmission and reception antennas due to a displacement of a rotation force transmission mechanism such as a belt or a gear, it is difficult for the users to detect and correct such displacement of azimuth angle.

Moreover, in both of the configurations shown in FIGS. 16 and 17, there is the problems such that the layout of the transmission and reception antennas and radomes cannot be simultaneously made optimum with respect to each antenna.

DISCLOSURE OF THE INVENTION

Therefore, it is an object of the present invention to provide a satellite communication apparatus for a movable body which can be miniaturized, made inexpensive and enhanced in performance by solving the above-mentioned various problems.

In order to attain the above-mentioned object, a satellite communication apparatus for a movable body according to a first aspect of the present invention is a satellite communication apparatus to be mounted on a movable body and for transmitting and receiving a signal between it and a satellite by automatically tracking the satellite. This satellite communication apparatus includes a movable reception antenna for receiving a signal from the satellite, a movable transmission antenna for transmitting a signal to the satellite, the transmission antenna being separated from the reception antenna, a first control means for controlling a direction of the reception antenna by using a closed-loop so as to track a signal transmitted from the satellite, and a second control means for controlling a direction of the transmission antenna by using an open-loop so as to track the direction of the reception antenna.

Also, a satellite communication apparatus for a movable body according to a second aspect of the present invention is a satellite communication apparatus to be mounted on a movable body and for transmitting and receiving a signal between it and a satellite by automatically tracking the satellite. This satellite communication apparatus includes a movable reception antenna for receiving a signal from the satellite, a movable transmission antenna for transmitting a signal to the satellite, the transmission antenna being separated from the reception antenna, a reception angle changing unit for changing an angle of the reception antenna, a transmission angle changing unit for changing an angle of the transmission antenna, and an automatic tracking unit for detecting a level of a signal received by the reception antenna, commanding a changed angle for increasing the detected level to the reception angle changing unit, and commanding the same changed angle as the changed angle commanded to the reception angle changing unit to the transmission angle changing unit.

According to the above-mentioned satellite communication apparatus for a movable body of the present invention, the reception antenna and the transmission antenna are configured completely independently from a mechanical standpoint but operated in synchronism with each other from an electrical standpoint. As a result, when the satellite communication apparatus is applied to vehicles such as a large bus, the reception antenna and the transmission antenna can be separately installed on a roof so as to avoid existing constructions such as a ventilator formed on the roof. Moreover, when this satellite communication apparatus is applied to vehicles such as a compact car, one of the reception antenna and the transmission antenna can be installed on a roof and the other can be installed within a cabin or a trunk, respectively.

BRIEF DESCRIPTION OF DRAWINGS

FIG. 1 is a block diagram showing an outline of a satellite communication apparatus for a movable body according to the present invention;

FIG. 2 is a block diagram showing a satellite communication apparatus for a movable body according to a first embodiment of the present invention;

FIG. 3 is a plan view showing a reception antenna apparatus 11 and a reception motor 13 shown in FIG. 2 with a radome 12 being removed;

FIG. 4 is a conceptual diagram used to explain a relationship among an angle error of antenna, a reception level and a differentiated value of a reception level and a relationship among a reception level and various threshold values;

FIG. 5 is a flowchart used to explain an example of a differentiation control executed by the satellite communication apparatus for a movable body according to the above-mentioned embodiment;

FIG. 6 is a flowchart used to explain an example of a hold control executed by the satellite communication apparatus for a movable body according to the above-mentioned embodiment;

FIG. 7 is a flowchart used to explain an example of a weight control executed by the satellite communication apparatus for a movable body according to the above-mentioned embodiment;

FIG. 8 is a flowchart used to explain an example of a sweeping control executed by the satellite communication apparatus for a movable body according to the above-mentioned embodiment;

FIG. 9 is a flowchart showing an example of a closed-loop control effected on a reception antenna together with an origin determining processing which is executed immediately after the processing is started in the above-mentioned embodiment;

FIG. 10 is a flowchart used to explain an interrupt processing for outputting an angle at which the reception antenna is changed based on the calculation of a CPU 30 in the above-mentioned embodiment;

FIG. 11 is a flowchart showing an example of another closed-loop control effected on the reception antenna in a second embodiment;

FIG. 12 is a flowchart showing an open-loop control effected on a transmission antenna in the above-mentioned embodiment;

FIG. 13 is a conceptual diagram used to explain a relationship between a turning angle of a vehicle and a tracking azimuth angle of an antenna;

FIG. 14 is a waveform diagram showing an example of the manner in which an angular velocity generated in accordance with the turning of the movable body, an integrated value of an angular velocity, a central value of a tracking azimuth angle, a sweeping angle amplitude and the like are changed with a time in the third embodiment;

FIG. 15 is a flowchart used to explain an example of a retrieval control executed by the satellite communication apparatus for a movable body according to the above-mentioned embodiment;

FIG. 16 is a plan view showing an arrangement of a conventional satellite communication apparatus for a movable body;

FIG. 17 is a plan view showing another arrangement of a conventional satellite communication apparatus for a movable body;

FIG. 18 is a conceptual diagram used to explain an arrangement of a satellite communication apparatus for a movable body to which the present invention is applied;

FIG. 19 is a block diagram showing an example of an arrangement of a master station shown in FIG. 18;

FIG. 20 is a flowchart used to explain a processing of a portion concerning an initialization in a radio tracking control executed by the master station and a remote station shown in FIG. 18;

FIG. 21 is a flowchart used to explain a processing of a major portion of the radio tracking control executed by the master station and the remote station shown in FIG. 18; and

FIG. 22 is a block diagram showing an example of an arrangement of a master station of a mobile satellite communication system in which a master station and a remote station transmit and receive data to and from a satellite respectively.

BEST MODES OF CARRYING OUT THE INVENTION

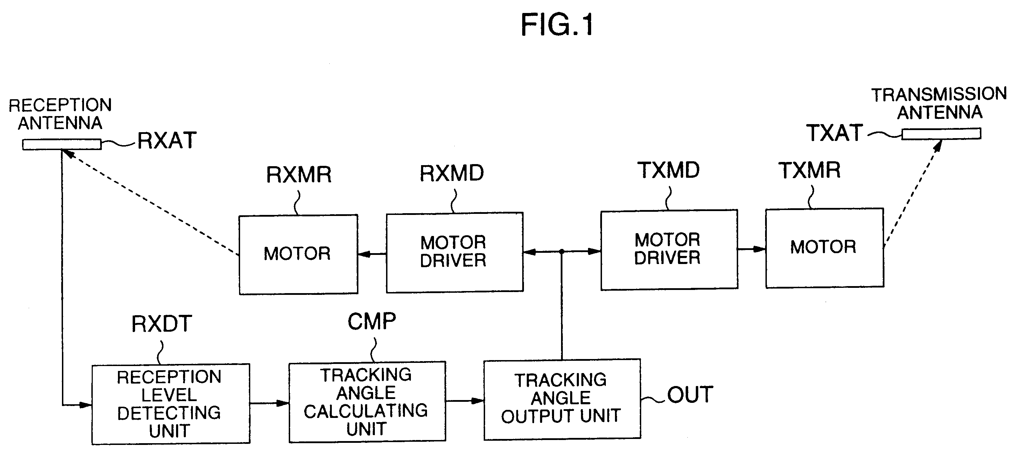

Initially, an outline of the present invention will be described with reference to FIG. 1. A satellite communication apparatus for a movable body according to the present invention comprises a reception system and a transmission system.

With respect to the reception system, there is formed a closed-loop of a radio tracking system which comprises a reception antenna RXAT, a reception level detection unit RXDT, a tracking angle calculation unit CMP, a tracking angle output unit OUT, a motor driver RXMD and a motor RXMR. On the other hand, with respect to the transmission system, there is formed an open-loop which comprises a tracking angle output unit OUT, a motor driver TXMD, a motor TXMR and a transmission antenna TXAT. The tracking angle output unit OUT outputs the same angle changing command as that used in controlling the tracking of the reception antenna to the transmission system.

In this case, the tracking angle output unit OUT may output the same angle changing command as that used in controlling this reception antenna to the transmission system.

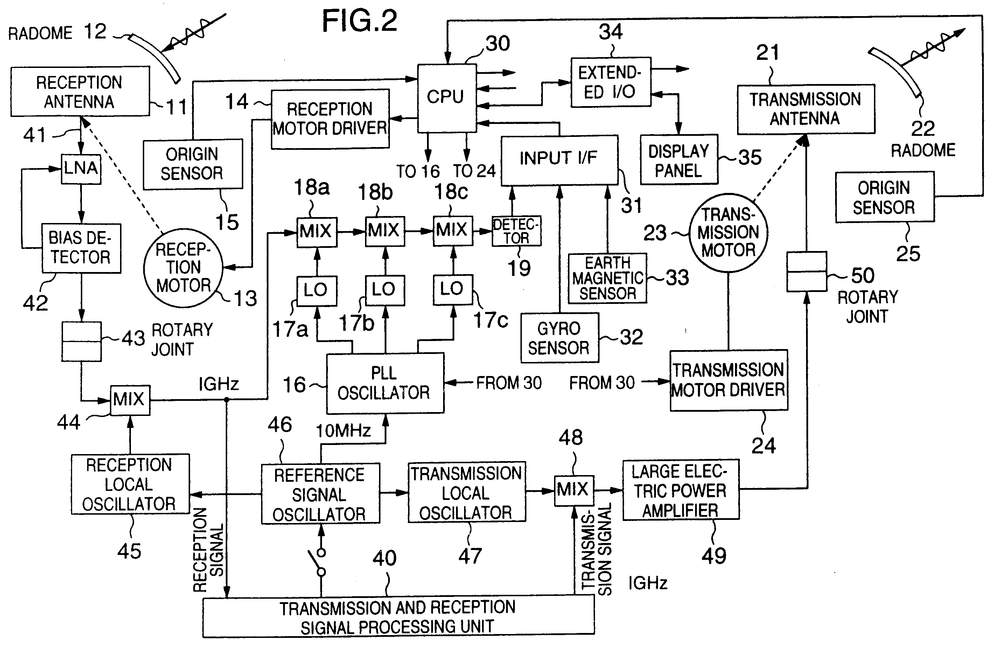

FIG. 2 is a block diagram showing an arrangement of a satellite communication apparatus for a movable body according to a first embodiment of the present invention. This satellite communication apparatus for a movable body includes as a signal processing system for processing a signal received at the reception antenna 11 and supplying a transmission signal to a transmission antenna 21 a transmission and reception/signal processing unit 40, a low-noise amplifier LNA41, a bias tee 42, a rotary joint (coupler) 43, a reception mixer MIX44, a reception local oscillator 45, a reference signal oscillator 46, a transmission local oscillator 47, a transmission mixer MIX48, a large electric power amplifier 49 and a rotary joint 50.

An outline of an operation of the above-mentioned signal processing system will be described. A high-frequency reception signal of 20 GHz band received at the reception antenna 11 after it had been transmitted from a satellite is supplied through the low-noise amplifier 41, the bias tee 42 for supplying a bias voltage to the low-noise amplifier and the rotary joint 43 to the reception mixer 44. A reception local signal of 20 GHz is supplied to the reception mixer 44 from the reception local oscillator 45, and an intermediate frequency signal of a difference frequency of 1 GHz of the high-frequency reception signal is output from the reception mixer 44 and fed to the transmission and reception/signal processing unit 40.

A transmission signal having an intermediate frequency of 1 GHz processed within the transmission and reception/signal processing unit 40 is supplied to the transmission mixer 48. A transmission local signal is supplied to the transmission mixer 48 from the transmission local oscillator 47. A high-frequency transmission signal having a sum frequency of 30 GHz with the transmission intermediate frequency is supplied through the large electric power amplifier 49 and the rotary joint 50 to the transmission antenna 21 and transmitted through the radome 22 to the satellite. The above-mentioned reception local oscillator 45 and the above-mentioned transmission local oscillator 47 are both comprised of PLL oscillators, and generate local oscillation signals of high frequency stability based on a reference signal of 10 MHz having a high frequency stability supplied from the reference signal oscillator 46.

The above-mentioned reception antenna 11 and the above-mentioned transmission antenna 21 are both comprised of waveguide slot array planar antennas having a tilt angle in the elevation angle direction. In order to automatically track the reception antenna 11 and the transmission antenna 21, this satellite communication apparatus for a vehicle includes a reception motor 13, a reception motor/driver 14, a reception antenna origin sensor 15, a PLL oscillator 16, local oscillators 17a to 17c, mixers 18a to 18c, a detector 19, a transmission motor 23, a transmission motor/driver 24, a transmission antenna origin sensor 25, a CPU 30, an input interface circuit 31, a gyro sensor 32 and an earth magnetism sensor 33 or the like.

In the automatic tracking, there is mainly carried out a radio tracking system which varies an azimuth angle of a reception antenna in the direction in which the level of the reception signal increases. In this radio tracking, the level of a pilot signal having a predetermined frequency contained in the reception signal is used as a reference level of a receive radio wave. That is, the intermediate frequency signal having the center frequency if 1 GHz output from the reception mixer 44 contains a pilot signal having a frequency higher than the center frequency by 30 MHz to control the antenna azimuth angle in the direction in which the level of the pilot signal extracted from the reception signal increases.

The level of the above-mentioned pilot signal is set to be a value which is lower than the level of the data signal by 5 dB in order to minimize an interference exerted upon the peripheral data signal. As a result, if only the pilot signal is extracted from the peripheral data signal by a band-pass filter circuit, then a C/N of the pilot signal is lowered. Then, it cannot be expected that a tracking accuracy is improved. Therefore, in order to extract the pilot signal from the data signal having the intermediate frequency while the high C/N state is maintained, the frequency-conversion is sequentially carried out three times by the mixers 18a to 18c of the three stage disposed in series.

Specifically, the intermediate frequency signal having the center frequency of 1 GHz output from the reception mixer 44 is supplied to the mixer 18a of the first stage which receives the local oscillation signal from the local oscillator 17a and thereby converted into a beat signal of 400 MHz. The beat signal of 400 MHz is supplied to the mixer 18b of the next stage which receives the local oscillation signal from the local oscillator 17b and thereby converted into a beat signal of 10 MHz. Further, the beat signal of 10 MHz is supplied to the mixer 18c of the final stage which receives the local oscillation signal from the local oscillator 17c and thereby converted into a beat signal of 450 kHz.

The beat signal of 450 kHz output from the mixer 18c of the final stage is AM-detected by the detector 19 as a DC voltage of a magnitude which indicates the level of the pilot signal, converted into a 12-bit digital signal by the input interface circuit 31 including an A/D converter, and then read by the CPU 30. As described above, when the frequency is down-converted a plurality of times, it is possible to extract the pilot signal set to the level lower than the data signal by 5 dB in order to avoid the interference under the condition that the high C/N ratio is maintained.

The satellite communication apparatus for a movable body according to this embodiment uses a tracking control using a gyro sensor in addition to the radio tracking control based on the level of the pilot signal extracted from the received radio wave. That is, by a gyro sensor 32 attached to a suitable portion of a vehicle which mounts thereon the satellite communication apparatus according to this embodiment, there is detected an angular velocity generated when this vehicle changes its course (turning).

As the gyro sensor 32, there can be used angular velocity meters of proper types such as one manufactured and distributed by MURATA MANUFACTURING COMPANY, LTD., under a trade name "GYROSTAR".

An angular velocity that is detected contains a polarity indicating a turning direction of a vehicle. This detected angular velocity is converted into a digital signal of 12-bit width by the input interface circuit 31, read by the CPU 30 and then stored in an internal memory.

The CPU 30 makes an integrated value of an angular velocity by integrating the thus read out angular velocity, and this integrated value of the angular velocity also is stored in the internal memory. These stored values are updated each time the output of the gyro sensor 32 is changed at a predetermined sampling period by the input interface circuit 31. The fact that the CPU 30 receives the angular velocity and the reception level of the pilot signal from the input interface circuit 31 and calculates the integrated value from the received angular velocity will hereinafter be expressed as that the CPU 30 detects the angular velocity, the reception level and the integrated values of the angular velocity.

The CPU 30 determines the rotation direction of the azimuth angle and the rotation angle for the tracking control of the reception antenna 11 based on the reception level of the detected pilot signal, the angular velocity and the integrated value, and issues a motor drive command for changing the azimuth angle of the reception antenna 11 to the reception motor driver 14. The reception motor driver 14 supplies drive pulses of polarity corresponding to the changing direction of the azimuth angle of the reception antenna 11 and whose number corresponds to a magnitude of the changed value of the azimuth angle to the reception motor 13 formed of a stepper motor in accordance with the motor drive command from the CPU 30.

Subsequently, the CPU 30 issues the same motor drive command as that supplied to the reception motor driver 14 to the transmission motor driver 24. The transmission motor driver 24 supplies drive pulses of polarity corresponding to the changing direction of the azimuth angle of the transmission antenna 21 and whose number corresponds to the changed value of the azimuth angle to the transmission motor 23 formed of a stepper motor in accordance with the motor drive command from the CPU 30. As described above, since the CPU 30 issues the motor drive command concerning the same azimuth angle change as that issued to the reception motor driver 14 to the transmission motor driver 34 in accordance with the radio tracking system, the reception antenna 11 and the transmission antenna 21 are controlled so as to keep the same azimuth angle constantly.

The respective antennas have the origin sensors 15, 25 disposed in order to realize the synchronizing control of the azimuth angle between the reception antenna 11 and the transmission antenna 21 as described above. These origin sensors can be formed of proper origin sensors, and may be formed of an optical position detection sensor based on a combination of a pair of a light-emitting element and a light-sensing element and a shielding member. Specifically, protrusions for shielding light are formed at predetermined portions of the circumference direction on the rotation side of a rotation holding mechanism of each antenna, and a pair of light-emitting element and light-sensing element are disposed at predetermined portions (referred hereinafter to as origins) of the circumference direction of the stationary side of the above-mentioned rotation holding mechanism under the condition that the light-emitting element and the light-sensing element can be opposed through these protrusions. Thus, the fact that the shielding protrusions are located at the origins can be detected when the reception level of the light-sensing element is lowered.

The azimuth angles of the respective antennas obtained when light is shielded by the above-mentioned protrusions are selected as reference points. The CPU 30 detects a displacement amount between the two reference points based on a difference of pulse numbers set to the pulse motor of the reception side and the pulse motor of the transmission side, and corrects such displacement amount. The detection and the correction of the displacement amount of the reference points are executed at the same time the CPU 30 executes one of a variety of suitable tracking controls, which will be described later on, such as a sweeping control. That is, the CPU 30 detects a difference of rotation angles of the motors at the origin detection time on both of the reception side and the transmission side based on the difference of pulse numbers when the sweeping control, which will be described later on, is executed, and corrects the displacement amount between both rotation angles as a displacement amount of the reference points.

Since the reception antenna apparatus and the transmission antenna apparatus are separated from each other completely, both of them cannot use the pulse motor commonly. However, general-purpose equipment such as the pulse motor are extremely inexpensive as compared with a radome which is a specially-designed equipment, and hence the satellite communication apparatus for a vehicle can be manufactured inexpensively on the whole.

Further, since the reception antenna and the transmission antenna are housed in the specially-designed radomes, it is possible to realize an optimum layout between the antenna body and the radome with respect to the respective reception and transmission frequency bands which are different from each other by 10 GHz, thereby making it possible to increase a sensitivity of the antenna including the radome.

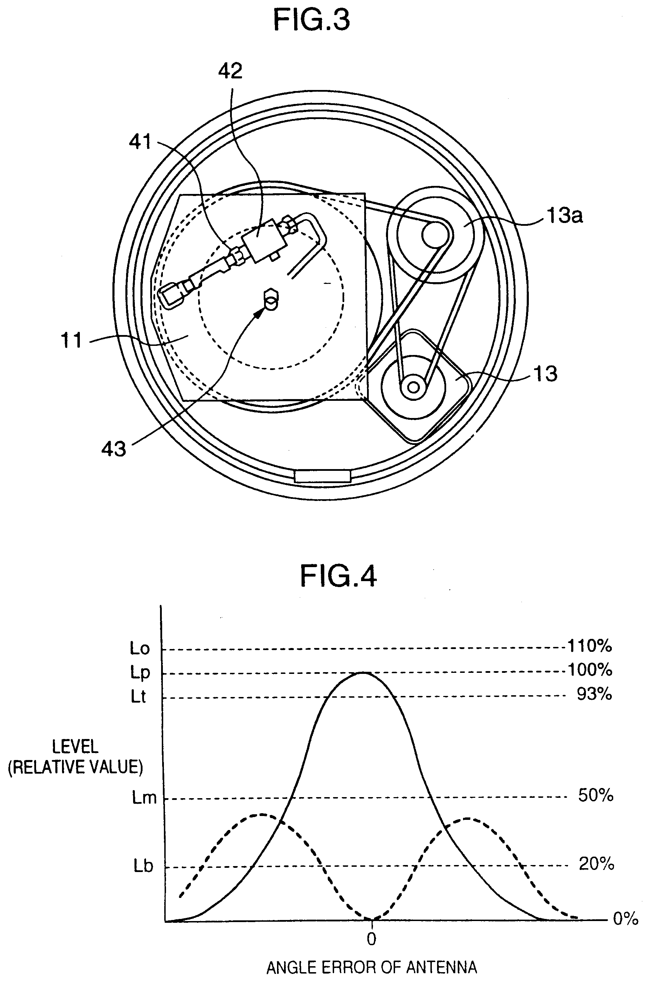

FIG. 3 is a plan view illustrating an arrangement of the reception antenna apparatus including the reception antenna 11 and the reception motor 13 of FIG. 2 under the condition that the radome 12 is removed from the reception antenna apparatus. Reference numeral 13a denotes a decelerator. The transmission antenna apparatus is configured in exactly the same way as the reception antenna apparatus of FIG. 3 is configured. As described above, in the satellite communication apparatus for a vehicle according to this embodiment, the reception antenna apparatus and the transmission antenna apparatus are of the completely independent type mechanically. Therefore, the reception antenna apparatus and the transmission antenna apparatus can be separately disposed on the roof of vehicle such as a large-sized bus so as to avoid a ventilator on the roof. With respect to a compact car, the reception antenna apparatus and the transmission apparatus can be separately disposed in such a manner that one is disposed on the roof and the other is disposed within a cabin or a trunk.

When the automatic tracking is carried out, several threshold values are defined with respect to the reception level in order to execute a variety of controls in response to reception levels which are changed from hour to hour. These threshold values are defined as ratios (relative values) relative to a peak value Lp as shown in FIG. 4. The peak value Lp is the maximum value of several latest reception levels detected by a microprocessor not shown. This peak value is updated by a large reception level each time a new reception level exceeding a threshold value Lo (e.g. value of 110% of the peak value) which is larger than the peak value by a predetermined magnification ratio is detected. The reason that a hysteresis of 10% is set each time the peak value is updated is to eliminate a useless processing such as frequently updating the peak value in accordance with a fluctuation of a reception level in a short period of time.

A threshold value Lt is a value (e.g. value of 93%) which is a little lower than the peak value Lp. As long as the reception level exceeds this threshold value Lt, the tracking accuracy is not updated by the rotation of the antenna. A threshold value Lb is a very small value (e.g. value of 20%) as compared with the peak value. When the reception level becomes lower than this threshold value Lb, it is regarded that there occurred a large angle error. In this case, the microprocessor starts execution of the sweeping control for searching the direction of the satellite by changing the azimuth angle of the antenna over 360° at maximum. A threshold value Lm is a nearly intermediate value (e.g. value of 50%) between the peak value Lp and the threshold value Lb. A meaning of this threshold value Lm will be described later on.

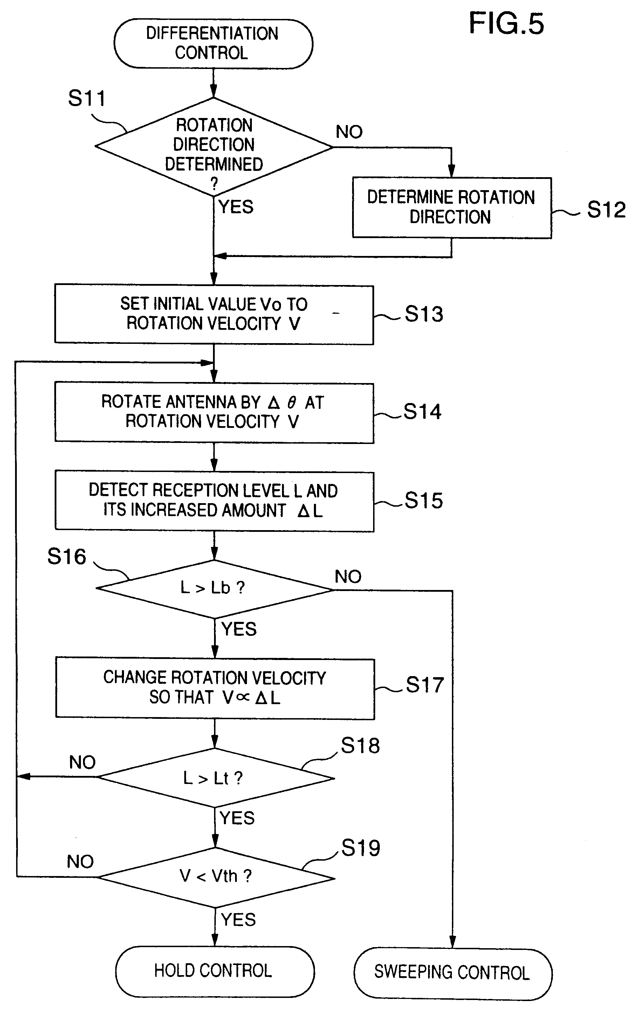

A differentiation control that is executed by the CPU 30 will be described with reference to a flowchart of FIG. 5. This differentiation control will be started mainly in the following cases:

(1) When the reception level larger than the threshold value Lb is detected as a result of executing the sweeping control; and
(2) When the reception level becomes lower than the threshold value Lt which is about 93% of the peak value and when it is determined on the basis of the detection of a purposive angular velocity large than the threshold value and the integrated value of such angular velocity that there occurred a considerably large angle error in accordance with the turning of the vehicle.

When starting the execution of the differentiation control, it is determined by the CPU 30 whether or not the rotation direction of the antenna is decided (step S11). If the tracking control that was executed immediately before this differentiation control is the sweeping control, then the rotation direction in which the reception level is increased to be higher than the threshold value Lb in this sweeping control is already decided. Also, if the chance for starting this differentiation control lies in the fact that the value of the angular velocity and the integrated value thereof exceed the purposive values, then the antenna may be rotated in the direction opposite to the turning direction of the vehicle indicated by the polarities thereof. Thus, the direction in which the antenna should be rotated is already decided.

However, since it is expected that the polarity of the integrated value of the angular velocity is not definite as compared with the case of the polarity of the angular velocity, only in this case, the direction in which the antenna should be rotated is decided (step S12). Specifically, initially, the microprocessor rotates the antenna by a predetermined angle in the direction which is expected based on the polarity of the integrated value of the angular velocity. Then, if the reception level increases in accordance with the rotation of the antenna, then this direction is decided as the correct direction in which the antenna should be rotated. If the reception level decreases, then the opposite direction is decided as the correct direction in which the antenna should be rotated.

After the direction in which the antenna should be rotated is decided, the CPU 30 sets an initial value Vo as an antenna rotation velocity V (step S13), and rotates the antenna by a predetermined angle $\Delta\theta$ in the decided direction at the rotation velocity Vo (step S14). There-after, the microprocessor detects a new reception level L and an amount $\Delta L$ which is the reception level increased from this reception level L before the antenna is rotated (step S15). Then, it is determined by the microprocessor whether or not the newly-detected reception level exceeds the threshold value Lb. If the newly-detected reception level exceeds the threshold value, then control goes to the next step S17. If not, then control goes to the sweeping control (step S16). If control goes to the step S17, then the microprocessor changes the antenna rotation velocity V to an amount proportional to the increased amount $\Delta L$.

The CPU 30 detects the reception level L newly, and determines whether or not this detected reception level exceeds the threshold value (step S18). If the detected reception level is not higher than the threshold value, then it is determined that the satellite is not captured. Then, control goes back to the step S14, whereat the antenna is rotated by the predetermined angle Δθ at the updated rotation velocity V. Incidentally, in this embodiment, the predetermined angle Δθ is set by the number of pulses supplied to the pulse motor, and the rotation velocity is changed by changing the time interval of the pulses supplied to the pulse motor. As described above, while updating the next rotation velocity to the value proportional to the increased amount of the reception level detected by the immediately-preceding rotation until the newly-detected reception level exceeds the threshold value Lt, the microprocessor repeats the rotation of the predetermined angle Δθ (steps S14 to S18).

If it is determined by the CPU 30 at the step S18 that the newly-detected reception level exceeds the threshold value Lt, then control goes to the next step S19, whereat it is determined whether or not a setting rotation velocity V is smaller than the predetermined threshold value Vth. If a judged result is negative, then control of the microprocessor goes back to the step S14, wherein the microprocessor repeats the controls from the steps S14 to S19 until this reception level L exceeds the threshold value Lt and the rotation velocity V becomes less than the threshold value Vth. If the newly-detected reception level sufficiently approaches the peak value Lp, then the judged result at the step S19 becomes affirmative. In this case, the microprocessor ends the execution of the differentiation control, and starts the execution of the hold control.

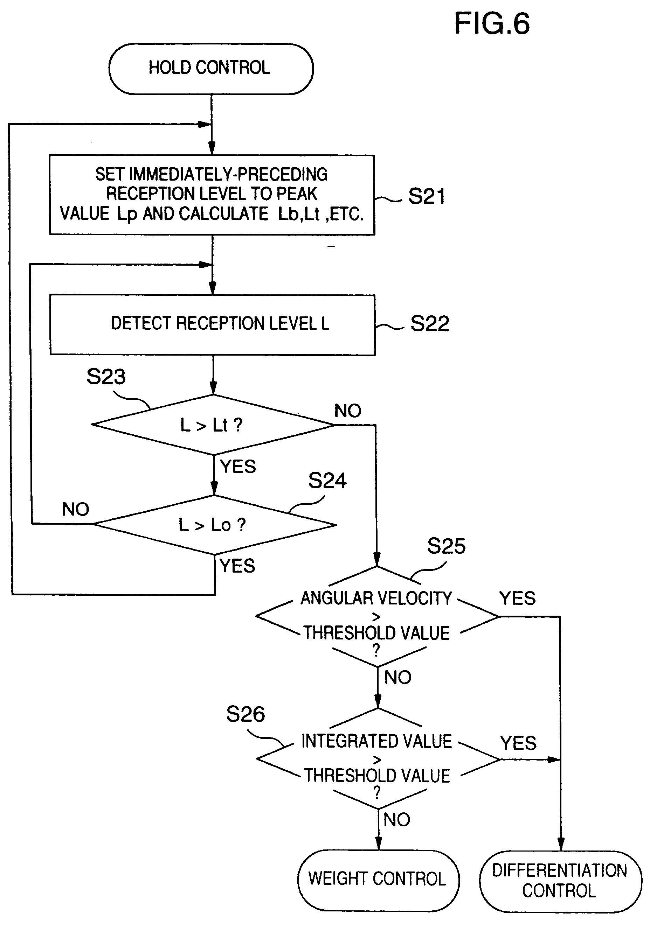

The hold control that is executed by the CPU 30 will be described with reference to the flowchart of FIG. 6. Initially, the CPU 30 sets the reception level detected immediately before the start of the hold control as a new peak value Lp, and calculates and sets again threshold values Lt, Lb, Lm, Lo which are relative values to this peak value (step S21). Then, the microprocessor detects a new reception level L (step S22), and compares this detected reception level with the threshold value Lt. If it is determined by the microprocessor that the reception level L is larger than the threshold value Lt, then control goes to a step S24, whereat this reception level L and the threshold value Lo are compared with each other. If it is determined that the newly-detected reception level is smaller than the threshold value Lo, then control goes back to the step S22, whereat the microprocessor repeats the processing up to the step S24.

That is, as far as the stable reception state that the newly-detected reception level L is kept to be a value larger than the threshold value Lt is maintained continuously, the processing from the steps S22 to S24 is repeated. While this repeat processing may be executed in such asynchronous state that the next processing is started immediately after the immediately-preceding processing is ended, such repeat processing may be executed in such a synchronizing state that the processing is repeated at a constant period by a latency of a predetermined time located at a proper portion.

During this hold control is executed, the antenna rotation angle is maintained to be a value which is obtained immediately before the hold control is executed.

If it is determined at the step S24 that the newly-detected reception level L exceeds the threshold value Lo, then control goes back to the step S21, whereat the CPU 30 again sets this new reception level as a new peak value Lp, and calculates and again sets threshold values Lt, Lb, Lm, Lo which are relative values to this new peak value. If it is determined at the step S23 that the newly-detected reception level L becomes smaller than the threshold value Lt, then the microprocessor detects an angular velocity, and it is determined whether or not the detected angular velocity exceeds the threshold value (step S25).

If it is determined that the detected angular velocity is not larger than the threshold value, then the microprocessor detects the integrated value, and detects whether or not the detected integrated value is larger than the threshold value (step S26). The integrated value of this angular velocity is an amount introduced so as to cope with a considerably large integrated value obtained during a long period of time when vehicles, for example, are running on the highway which draws gentle and large curves although a displacement velocity of tracking error is small. In that case, although the angular velocity itself is not larger than the threshold value, its integrated value exceeds the purposive value.

If it is determined at the steps S25 and S26 that either the angular velocity or its integrated value exceeds the threshold value thereof when the reception level L becomes lower than the threshold value Lt, then the CPU 30 regards that the tracking error increased in accordance with the turning of the vehicle, and starts the execution of the earlier-described differentiation control with reference to FIG. 5. If it is determined at the steps S25 and S26 that neither the angular velocity nor its integrated value exceeds the threshold value thereof when the reception level L becomes lower than the threshold value Lt, then the CPU 30 regards that the decrease of the reception level is due to a short-break caused by a shielding material, and starts the execution of a weight control.

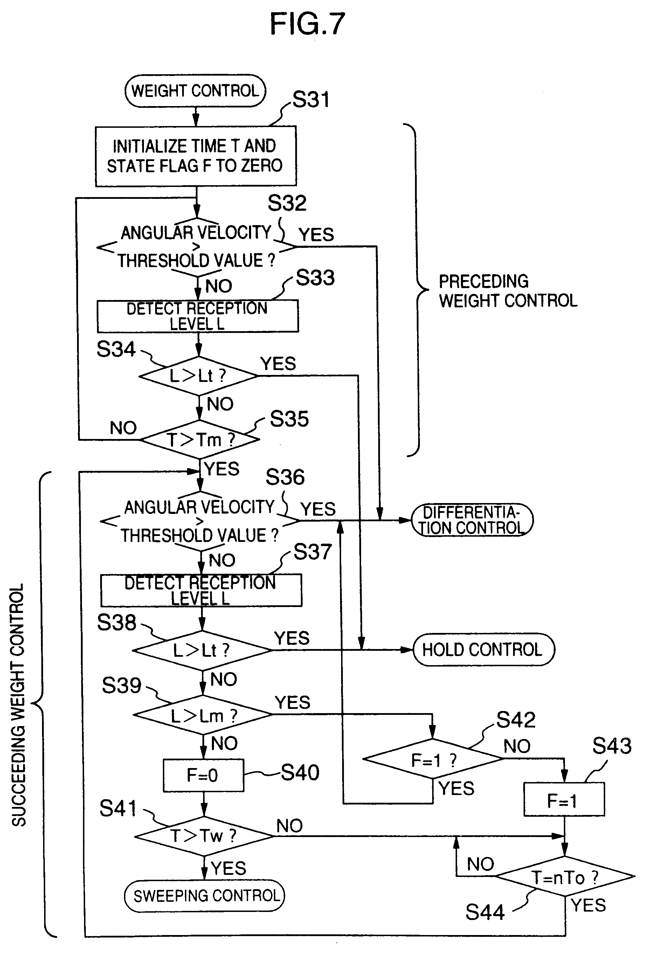

The weight control that is executed by the CPU 30 will be described next with reference to a flowchart of FIG. 7. Fundamentally, this weight control is executed in order to watch that the reception level is returned to a value larger than the threshold value or that the angular velocity becomes a value larger than the threshold value, whereby the central processing unit is moved to the controlled states based on the respective state changes. Specifically, if the reception level is returned to the value larger than the threshold value Lt, then the central processing unit regards that the reception level is lowered temporarily (short-break) by the shielding material, and is returned to the hold control.

Also, if the angular velocity that is larger than the threshold value is detected during this latency period, then the central processing unit regards that the decrease of the reception level is due to not only the short-break caused by the shielding material but also the angular error caused in accordance with the turning of the vehicle, and moves to the differentiation control. As the above-mentioned case, it may be considered that there occurred multiple change such as when the angular error occurs in accordance with the turning of the vehicle immediately after the short-break is caused by the shielding material.

Fundamentally, this weight control comprises a first half portion (preceding weight control) in which the monitoring of the change of the state is repeated in a short cycle and a latter half portion (succeeding weight control) in which the monitoring of the change of the state is repeated in a long cycle. By way of example, the whole period for executing the weight control is set to about 2 seconds, in which its first half portion is set to about 0.3 second and its latter half portion is set to about 1.7 seconds. Also, the cycle in which the monitoring of the change of the state is repeated is set to about 10 milliseconds with respect to the first half portion and is set to about 100 milliseconds with respect to the latter half portion.

When starting the execution of the weight control, the processor 30 initializes a time T, which is incremented at a constant speed by a counter in order to manage an elapsed time, and a state flag F (step S31). Then, it is determined by the CPU 30 whether or not a purposive acceleration of a magnitude larger than a predetermined threshold value is detected (step S32). If such a purposive acceleration is not detected, then the processor detects a new reception level L (step S33), and it is determined by the processor whether or not the detected new reception level is larger than the threshold value Lt (step S34).

If the reception level is smaller than the threshold value Lt, then it is determined by the CPU 30 whether or not an elapsed time T obtained from the start of the execution of this weight control is greater than a predetermined time Tm which determines the first half portion (preceding weight control) of this weight control (step S35). If the elapsed time is less than the predetermined time, then control goes back to the step S32, and the preceding steps up to the step S35 are repeated. Although this repeat processing may be executed in an asynchronous state such that the next processing is started immediately after the preceding processing is ended as shown in FIG. 6, such repeat processing may be executed in a synchronizing state such that a waiting state of a predetermined duration of time is set to proper portion so that the processing is repeated at every constant cycle (e.g. 10 milliseconds).

If the purposive acceleration is detected during the above-mentioned repeated processing (step S32), then the CPU 30 regards that not only the shielding material but also the turning of the vehicle is related to the decrease of the reception level, and is immediately returned to the hold control.

If it is determined that the elapsed time T is greater than the predetermined time Tm during the above-mentioned repeated processing (step S35), then the CPU 30 goes to the succeeding weight control which begins with a step S36. When the execution of the succeeding weight control is started, initially, it is determined by the microprocessor whether or not the angular velocity is greater than the threshold value (step S36). If such purposive angular velocity is not detected, then the microprocessor detects a new reception level L (step S37), and it is determined by the microprocessor whether or not the new detected reception level is greater than the threshold value Lt (step S38).

If the reception level L is lower than the threshold value Lt, then it is determined by the CPU 30 whether or not this reception level L is greater than the threshold value Lm (step S39). If this reception level L is less than the threshold value Lm, then the microprocessor sets the state flag F to "0" (step 540). Then, it is determined by the microprocessor whether or not the elapsed time T from the start of the execution of this weight control is greater than the predetermined value Tw which defines the execution period of this weight control (step S41).

If it is determined that the elapsed time T from the start of the execution of the weight control is less than the predetermined value Tw, then the CPU 30 goes to a step S44, and is returned through the wait state (step S44) which is set so as to determine a predetermined repeat cycle To to the step S36, wherein this step to the step S44 are repeated. If a purposive angular velocity is detected during the above-mentioned repeat processing similarly to the case of the preceding weight control (step S36), then the CPU 30 regards that not only the shielding material but also the turning of the vehicle is related to the decrease of the reception level, and then starts the execution of the differentiation control immediately.

On the other hand, if it is determined that the reception level is higher than the threshold value Lt during the above-mentioned repeat processing (step S38), then the CPU 30 regards that the decrease of the reception level is due to a short-break caused by the shielding material, and is then returned to the hold control immediately.

If it is determined at the step S41 that the elapsed time T from the start of the execution of the weight control is longer than the predetermined value Tw, then the CPU 30 regards that the decrease of the reception level is not due to the short-break caused by the shielding material, ends the execution of this weight control, and starts the execution of the sweeping control for effecting the search of the satellite direction within 360° at maximum.

If it is determined that the newly detected reception level L is smaller than the threshold value Lt but is greater than the threshold value Lm (step S39), then the CPU 30 checks whether or not the state flag F is 1 (step S42). If the state flag F is zero, then the CPU 30 changes the state flag to 1 (step S43), and is returned through the waiting state of the step S44 to the step S36. Thereafter, if it is determined at the step S42 that the state flag F is 1, then the CPU 30 ends this weight control and starts the execution of the differentiation control.

The reason that the state flag F is used is to improve a tracking property by immediately executing the differentiation control without the sweeping control because it is determined that the tracking error is not a large value when the reception level L is not greater than the threshold value Lt but exceeds the threshold value Lm twice continuously.

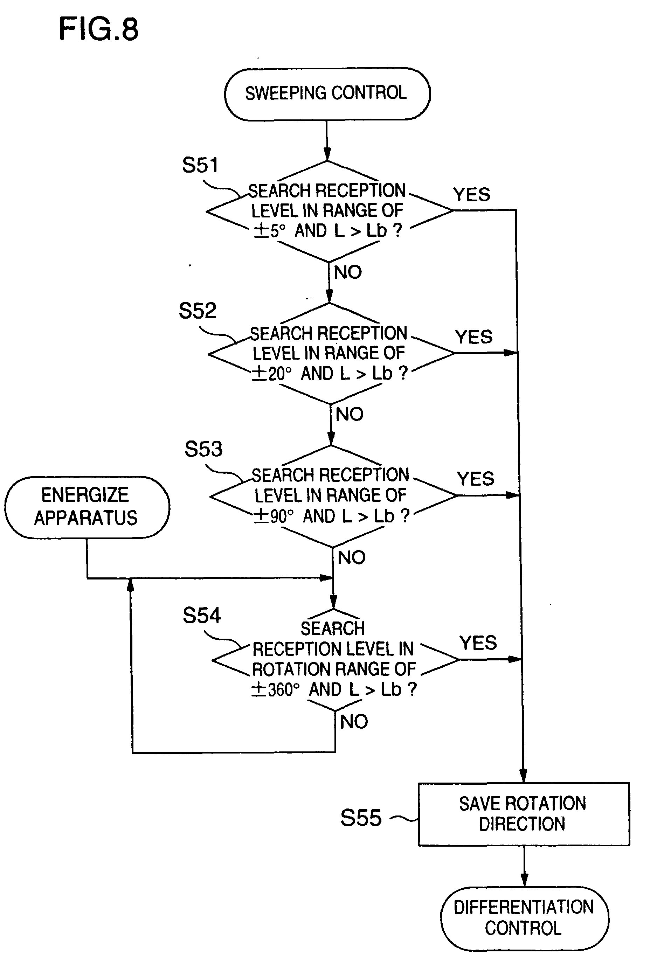

The sweeping control that is executed by the CPU 30 will be described next with reference to a flowchart of FIG. 8. This sweeping control is the satellite direction search control executed when there is continued a large tracking error state for a predetermined period of time in which the reception level cannot exceed even the threshold value Lm which is set to be a considerably low value (e.g. value of 50%) as compared with the peak value, when it is judged to the extreme case that the satellite direction is lost during the tracking or when the tracking operation is started immediately after the apparatus is energized.

When starting the execution of the sweeping control, the microprocessor detects the reception level by rotating the antenna about a present rotation angle within a range of ±5° at maximum. Then, it is determined by the microprocessor whether or not the detected reception level is higher than the threshold value Lb (step S51). If the reception level is not higher than the threshold value Lb, then the microprocessor goes to the next step S52, whereat the microprocessor detects the reception level by repeatedly rotating the antenna about a present rotation angle within a range of ±20°, and it is determined by the microprocessor whether or not the detected reception level is higher than the threshold value Lb.

Similarly, until the reception level L exceeds the threshold value Lb, the microprocessor executes the sweeping control while increasing the rotation range of the antenna in a stepwise fashion such as ±90°, 360°. If it is determined at any of the steps S51 to S54 that the reception level L exceeds the threshold value Lb, then the microprocessor saves the antenna rotation direction which causes this result (step S55), and goes to the execution of the differentiation control.

Incidentally, each of the steps S51 to S54 is expressed by a single step for the sake of convenience. However, more in detail, each step comprises the array of steps whose number is equal to the number of (maximum rotation angle/unit rotation angle) with respect to each rotation direction, each step comprising three kinds of steps of a step for rotating the antenna by only the unit angle, a step for detecting a new reception level L and a step for comparing this reception angle L and the threshold value Lb with each other.

According to the above-mentioned embodiment, when the detected reception level L is greater than the predetermined threshold value Lb, the tracking azimuth angle is changed so as to increase this reception level L. Also, when the detected reception level is greater than another threshold value Lt larger than the above-mentioned threshold value Lb and the changing velocity of the immediately-preceding tracking azimuth angle is smaller than a predetermined threshold value, it is determined that the apparatus is placed in a satisfactory tracking state in which the antenna body portion is directed in the satellite substantially accurately. Then, the microprocessor executes a hold control for maintaining the tracking azimuth angle at a constant value. By the addition of this hold control, it is possible to omit a useless tracking operation.

However, according to this radio tracking system, if the reception level rapidly decreases due to the rapid increase of tracking error caused in accordance with the rapid turning of the vehicle and approaches approximately the noise level, it may be frequently observed that a radio tracking cannot be continued. Such state will hereinafter be referred to as tracking-disabled state. According to the above-mentioned embodiment, if the reception level becomes less than the predetermined threshold value Lb, then it is determined that the apparatus is placed in the tracking-disabled state. In the above-mentioned embodiment, there is added the sweeping control (sweeping mode) in which when the tracking-disable state occurs, the antenna body portion is vibrantly turned to recapture the satellite while the vibration is progressively increased about the tracking azimuth angle of that point.

Moreover, the tracking-disabled state occurs not only when the vehicle turns rapidly but also when the vehicle is hidden by the shielding materials such as mountains, trees or buildings while the vehicle is going straight ahead. If the tracking-disabled state is caused by the shielding material, there is then presented the problem that the tracking azimuth angle of the antenna will become different from an original value when the above-mentioned sweeping control is started. Therefore, according to the above-mentioned embodiment, there is used an arrangement which includes an angular velocity sensor for discriminating based on a detected value thereof and an integrated value of the detected value the tracking-disabled state caused by the sudden turning of the vehicle from the tracking-disabled state caused by the appearance of the shielding material. Thus, the weight control takes measures against the tracking-disabled state caused by the shielding material.

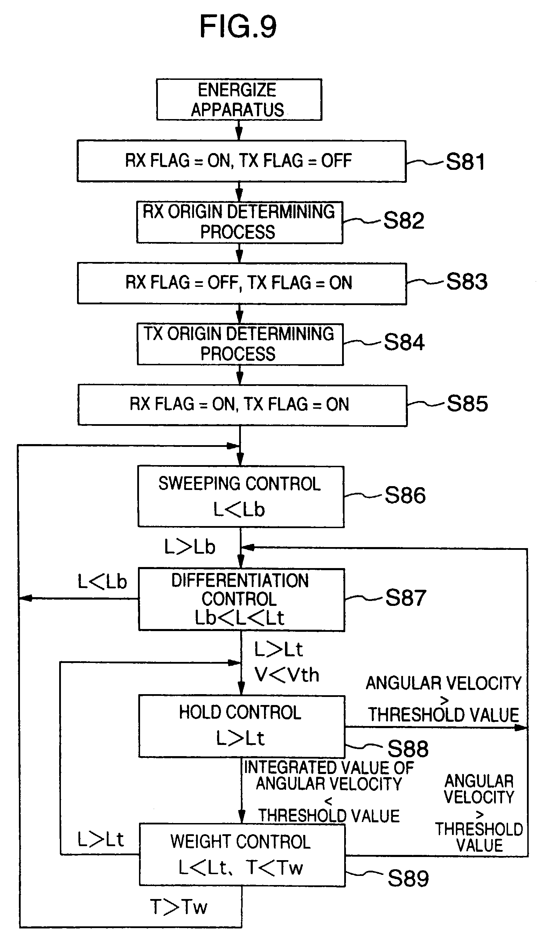

FIG. 9 is a flowchart showing the whole of the closed-loop control effected on the reception antenna together with the origin determining processing which is executed immediately after the processing is started. Initially, only an RX flag is set in the ON state in order to permit only the changing angle relative to the reception antenna to be output (step S81), and the origin determining processing for the reception antenna is executed (step S82). Then, only a TX flag is set in the ON state in order to allow the changing angle relative to the transmission antenna to be output (step S83), and the origin determining processing for the transmission antenna is executed (step S84).

At the completion of the origin determining processing, both of the RX flag and the TX flag are set to the ON state in order to permit the changing angles relative to both of the reception antenna and the transmission antenna to be output (step S85), and there are executed the various controls based on a relationship of magnitudes among the reception levels, the angular velocities generated in the vehicle and its integrated values or the duration and the predetermined threshold values (steps S86 to S89).

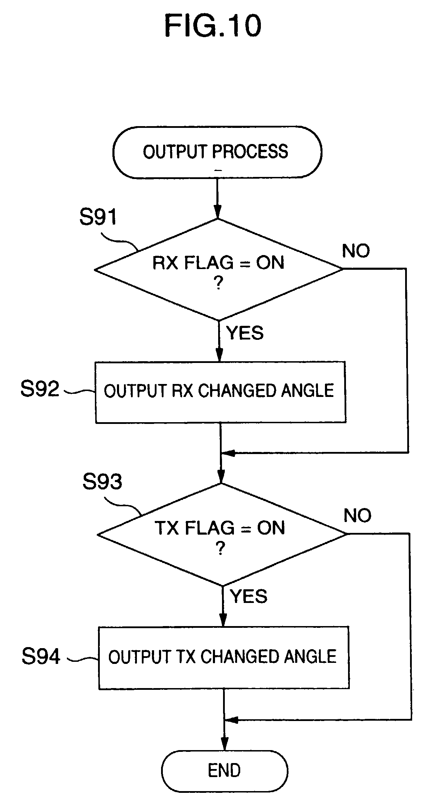

The changing angle that is calculated by the CPU 30 for the reception antenna is output to the reception motor driver and the transmission driver by the interrupt processing shown in a flowchart of FIG. 10. That is, as shown in the flowchart of FIG. 9, since the RX flag and the TX flag are constantly ON except during the origin determining period, the changing angle calculated by the CPU 30 is initially output to the reception system and then output to the transmission system. As described above, regardless of the fact that the control executed by the reception system is the sweeping control, the differentiation control, the hold control or the weight control, the exactly the same control is effected on the open-loop transmission system.

Subsequently, a second embodiment in which the same angle changing command as that used to control the reception antenna is issued only when the tracking state of the reception antenna is satisfactory will be described.

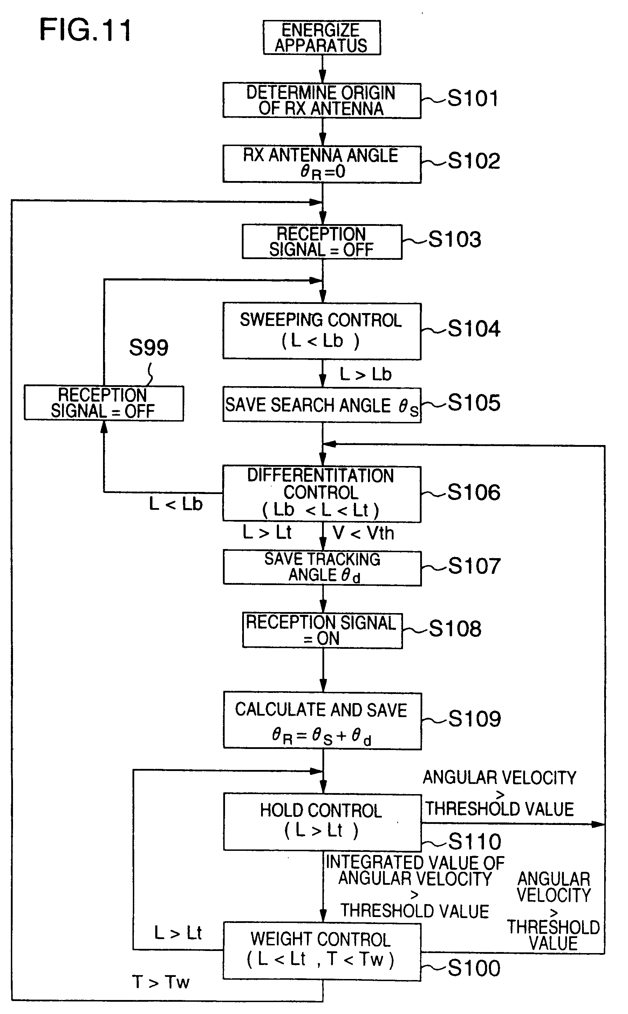

FIG. 11 is a flowchart showing the whole of the closed-loop control effected on the reception antenna at that time together with the origin determining processing executed immediately after the processing is started. When the apparatus is energized, initially, the origin determining processing for the reception antenna is executed (step S101), and an angle $\theta_R$ of the reception antenna is set to 0° (step S102). Then, the reception flag indicative of the fact that the reception state is satisfactory is turned OFF, whereby there is displayed that the reception state does not yet reach the satisfactory state (step S103).

Subsequently, the sweeping control is started (step S104). If the reception level L becomes larger than the threshold value Lb during this process, then a search angle $\theta s$ is saved (step S105), and the differentiation control is started (step S106). If the reception level L is smaller than the threshold value Lb, then the reception signal is turned OFF (step S99), and the sweeping control is started. If the reception level L exceeds the threshold value Lt during this differentiation control process, then a tracking angle $\theta d$ of the reception antenna in this state is saved (step S107), the reception signal indicating that the reception state reaches the satisfactory state is turned ON (step S108), a reception antenna angle $\theta_R = \theta_s + \theta_d$ is calculated and then stored in the memory (step S109).

Thereafter, in response to a relationship of magnitudes among the reception level L, the angular velocities of the vehicle, their integrated values or the duration and the threshold values, control goes to the hold control state and the weight control state (steps S110, S100). If an angular velocity that is larger than the threshold value acts under the hold control state and the weight control state, then the differentiation control is started (step S106). If the reception level is continuously lowered for the period of the threshold value Tw in response to the weight control state, the control goes back to the step S103, whereat the reception signal is turned OFF, and then the sweeping control is started (step S104).

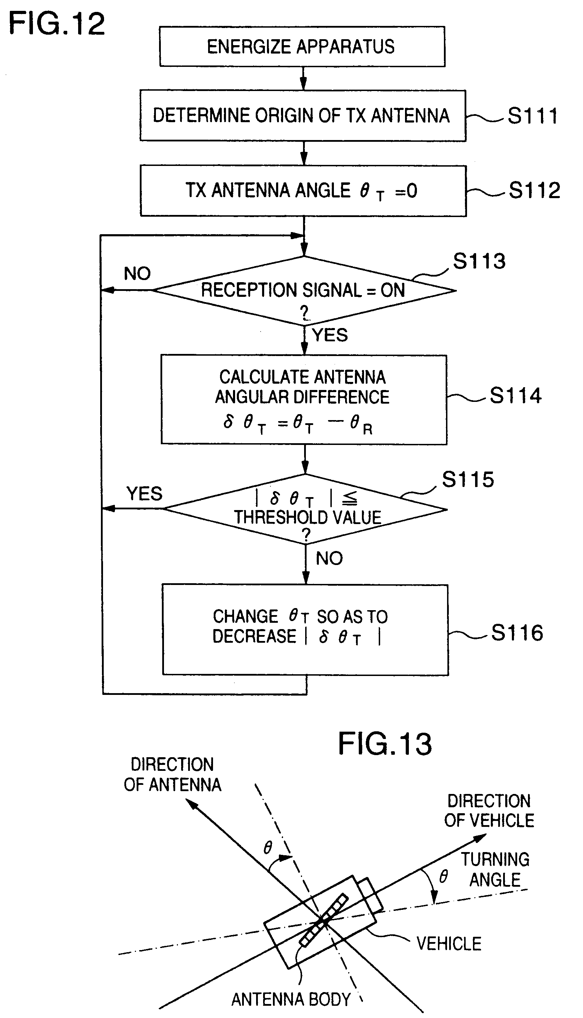

FIG. 12 is a flowchart showing the open-loop control effected on the transmission antenna. When the apparatus is energized, similarly to the case of the reception antenna, the origin determining processing relative to the transmission antenna is initially executed (step S111), and an angle $\theta_T$ of the transmission antenna is set to 0° (step S112). Then, in order to judge that the reception state of the reception antenna is satisfactory, it is determined whether or not the reception signal is ON (step S113). If the reception state is not satisfactory, then the transmission antenna is placed in the stopped state until the reception state becomes satisfactory. If the reception state becomes satisfactory, then a transmission antenna and transmission antenna angle difference $\delta\theta_T = \theta_T - \theta_R$ is calculated (step S114). If its absolute value is greater than the threshold value, then the angle $\theta_T$ of the transmission antenna is varied so as to decrease the absolute value until the absolute value becomes less than the threshold value (steps S115, S116).

That is, if the sweeping control and the differentiation control are effected on the reception antenna, then the reception signal is OFF, and the change of the angle relative to the transmission antenna is postponed during this period. As a consequence, the executions of the sweeping control and the differentiation control for the radio tracking which is meaningless for the open-loop control transmission antenna are omitted so that the tracking mechanism can be effectively avoided from being worn out and that the electric power for the tracking can be effectively avoided from being consumed.

According to the above-mentioned differentiation control, the rotation of the antenna over the predetermined angle is repeated. Then, the rotation of the antenna over the predetermined angle is carried out at a high speed as the reception level per unit angle increases in accordance with the immediately-preceding rotation. Also, as disclosed in the above-mentioned embodiment, if the reception level is higher than the threshold value Lt having the value larger than the threshold value Lb and the velocity V at which the antenna is rotated just before is smaller than the predetermined threshold value Vth, then it is regarded that the antenna is placed in the tracking satisfactory state in which the antenna is substantially accurately directed in the satellite direction. Thus, the reception flag becomes "ON", and the hold control for keeping the tracking angle in the fixed state is executed. In this hold control, the threshold value Lt is defined as a ratio relative to the maximum reception level which is updated by a detected larger reception level.

In the radio tracking system according to the above-mentioned embodiment, if the tracking is disabled due to the sudden turn of the vehicle, then the above-mentioned sweeping control is started immediately. However, in such sweeping control, it is frequently observed that the tracking azimuth angle which becomes the center of the vibratory change is considerably displaced from the original value in accordance with the sudden turn of the vehicle. Therefore, a third embodiment which can solve the above-mentioned case will be described hereinafter.

The third embodiment concerning the electrical arrangement of the present invention is configured in such a manner that the sweeping control in the above-mentioned embodiment is replaced with a search mode having an estimation of a satellite direction. In this third embodiment, the CPU 30 executes a vehicle turning angle detection routine and a radio tracking routine in a time sharing manner at the same time the above-mentioned radio tracking control is executed.

In the vehicle turning angle detection routine, the CPU 30 calculates an integrated value of an angular velocity, i.e. turning angle of vehicle by sequentially reading and accumulating sampling values of angular velocities output from the gyro sensor 32 through the input interface circuit 31, and writes the resultant integrated value of the angular velocity in the internal memory. In this vehicle turning angle detection routine, if the hold control is executed in the radio tracking routine which is executed at the same time, then a detected turning angle of vehicle is reset to zero.

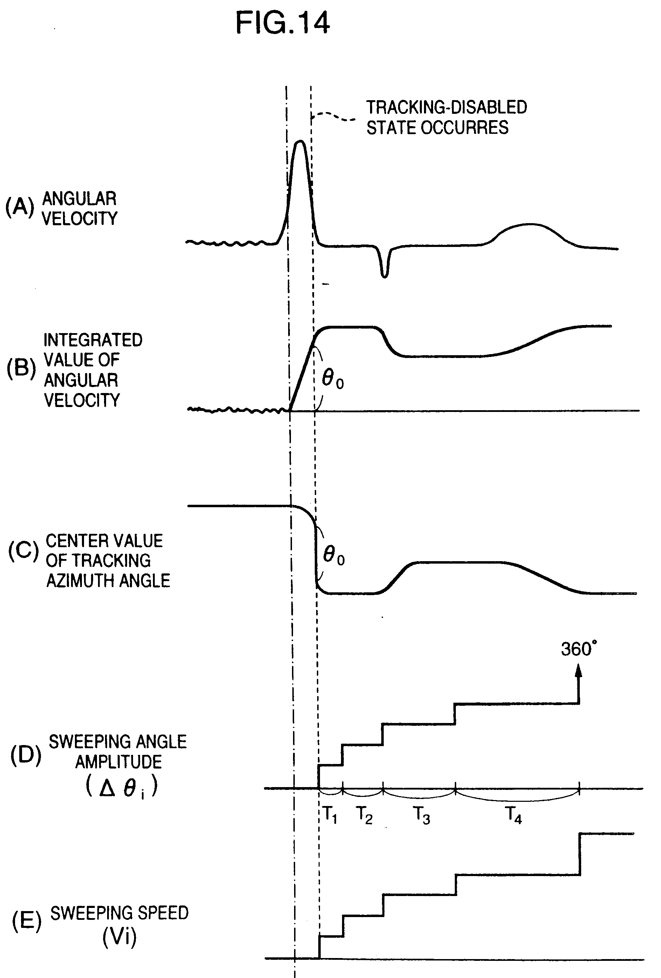

FIG. 13 shows a relationship between the turning angle of the vehicle and the tracking azimuth angle of the antenna body. When the vehicle makes a turn by an angle $\theta$, a displacement of the tracking azimuth angle of the antenna body also becomes $\theta$. FIG. 14 shows the manner in which an angular velocity (A) generated in accordance with the turn of the vehicle and which is detected by the gyro sensor 32, its integrated value (turning angle) (B), a center value (C) of the tracking azimuth angle $\theta$ of the antenna body portion AT set by the search routine started at the opportunity of the tracking-disabled state, a sweep angle amplitude (D) of a tracking azimuth angle about the center value and a sweep speed (E) are changed with a time.

If the antenna is set in the satisfactory tracking state until the turning of the vehicle is started, then the CPU 30 is placed in the hold control execution state. Under this hold control state, a value which results from integrating the angular velocity detected by the gyro sensor 32 is reset to zero at a predetermined cycle, whereby the occurrence of accumulated errors caused by the error of the gyro sensor or the like can be prevented.

If the antenna is deviated from the satisfactory tracking state as the time shown by a dot-and-dash line in accordance with the turning of the vehicle, then there is started the radio tracking based on the differential control instead of the hold control. After this radio tracking is started, the resetting of the integrated value (turning angle) of the angular velocity to zero is stopped, and the integrated value starts to increase. If the antenna cannot track the satellite direction by the radio tracking because of the sudden turn of the vehicle and the tracking-disabled state in which the reception level L becomes less than the predetermined threshold value Lb, then the execution of the search routine is started instead of the radio tracking routine. If this tracking-disabled state occurs at the time shown by the dot-and-dash line in FIG. 14, then at the time when the search routine is started, the detected turning angle is $\theta_o$.

When the search routine is started, initially, the detected turning angle $\theta_o$ is subtracted from a tracking azimuth angle (0°) of the present time, and a resultant subtracted value ($-\theta$°) is set to a sweep center value of the tracking azimuth angle. Concurrently therewith, there are a sweep angle amplitude $\Delta\theta i$ which increases progressively, a sweep velocity vi and a sweep time Ti. By changing the azimuth angle with an amplitude set around the above-mentioned center value and at a time set by the sweep velocity, it is repeatedly determined whether or not the reception level L is greater than the threshold value Lb.

During this sweeping, based on the integrated value of the angular velocity generated after the search routine is started, the center value of the tracking azimuth angle is updated repeatedly. When it is detected that the reception level L exceeds the threshold value Lb, the radio tracking routine is resumed instead of this search routine. If the reception level L does not exceed the threshold value Lb after a predetermined time Tmax is elapsed from the start of this search routine, there is started a search of a final stage in which the reception antenna 11 and the transmission antenna 21 are rotated within 360°.

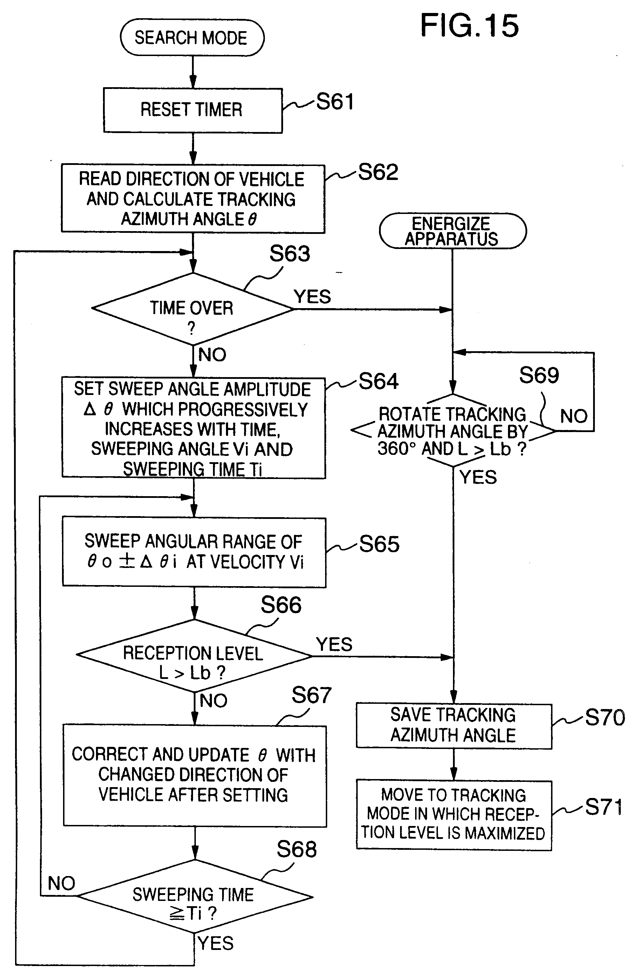

FIG. 15 is a flowchart showing an example of the above-mentioned search routine that is executed by the CPU 30. When starting the execution of the above-mentioned search routine, the CPU 30 resets a timer housed therein (step S61), subtracts the detected turning angle $\theta_0$ of the vehicle from the tracking azimuth angle obtained at the time the synchronization is disabled, and sets the resultant subtracted value $-\theta_0$ as the sweep center value (step S62). Then, it is determined by the CPU 30 whether or not the elapsed time T from the search start time reaches the time Tmax at which the search of the final stage should be started (step S63). If not, then the sweep angle amplitude $\Delta\theta i$ which increases progressively, the sweep velocity Vi and the sweep time Ti are set together with the elapsed time T obtained from the search start time (step S64).

Then, it is determined by the CPU 30 by sweeping the angular range of $-\theta_0 \pm \Delta\theta i$ at the velocity Vi whether or not the reception level L exceeds the threshold value Lb (steps S65, S66). If the reception level L is not greater than the threshold value Lb, the CPU 30 subtracts the changed amount of the vehicle turning angle generated after the setting from the setting sweep center value $-\theta_0$, and sets a resultant subtracted value at a new center value (step S67). Then, it is determined by the CPU 30 whether or not the sweep time is greater than the set time Ti (step S68). If the sweep time is not greater than the set time, then control goes back to the step S65, and the steps up to the step S68 are repeated. If the sweep time is greater than the set time Ti, then control goes through the step S63 to the step S64, whereat the CPU 30 increases the sweep angle amplitude $\theta i$, the sweep velocity Vi and the sweep time Ti by one step, and repeats the steps S65 to S68.

If it is determined at the step S66 that the reception level L is greater than the threshold value Lb, then the CPU 30 saves a present tracking azimuth angle (step S70), and moves to the radio tracking state by the differentiation control. If it is determined at the step S63 that the elapsed time T from the start time of the search control is greater than the predetermined time Tmax, then the CPU 30 changes the tracking azimuth angle within 360° until the reception level L exceeds the threshold value Lb (step S69). If it is determined that the reception level L is greater than the threshold value Lb, then the CPU 30 saves a tracking azimuth angle obtained at the time the reception level exceeds the threshold value, and returns to the radio tracking state by the differentiation control. The execution of the step S69 is immediately started when the satellite antenna apparatus is energized.

In the above-mentioned differentiation control, there is illustrated the arrangement in which the rotation velocity is made proportional to the increased amount of the reception level in accordance with the immediately-preceding rotation over a predetermined angle. However, this rotation velocity can be made proportional to the square of the above-mentioned increased amount or other proper function relationship relative to this increased amount can be set. Furthermore, the increased amount of the reception level per the predetermined angle may be replaced with a proper unit angle different from the predetermined angle, e.g. the increased amount of the reception level per 1° or 10°.

With respect to the above-mentioned tracking control, instead of the arrangement in which the angular velocity and its integrated value are detected in response to the kinds of vehicle and the detection accuracy of the angular velocity sensor, there may be used an arrangement in which only an angular velocity is detected and the detection of its integrated value is omitted and an arrangement in which a vehicle turning angle generated immediately before the tracking-disabled state is detected by starting the integration of the saved angular velocity with the retroaction of a predetermined time only when it is determined that the tracking state based on the radio tracking means is deviated from the satisfactory tracking state.

Moreover, there may be used an arrangement in which the satisfactory tracking state is judged based on only the magnitude of the reception level, an arrangement in which the vehicle turning angle obtained before and after the tracking-disabled state occurs is detected by starting the integration from the time an angular velocity exceeds a predetermined threshold value, and an arrangement in which the vehicle turning angle which causes the tracking-disabled state is detected by detecting a changed amount of an integrated value saved immediately before the tracking-disabled state occurs after several latest integrated values had been saved by periodically executing the integration of the angular velocity regardless of the reception state.

Furthermore, there may be used an arrangement in which a correction of a center value of a tracking azimuth angle is omitted in order to alleviate a predetermined time of an integration after the search of the satellite is started, an arrangement in which the sweep amplitude angle and the sweep velocity are smoothly increased instead of progressively increasing them, an arrangement in which a DC motor is combined with an encoder instead of using a pulse motor or an arrangement in which the tracking apparatus of the present invention is applied to an antenna which receives or transmits radio waves from other stationary satellite or mobile satellite such as a communication satellite instead of a satellite broadcasting reception antenna.

Next, there will be described an arrangement in which the present invention is applied to a mobile satellite communication system of a space diversity type including a plurality of antennas mounted on a movable body.

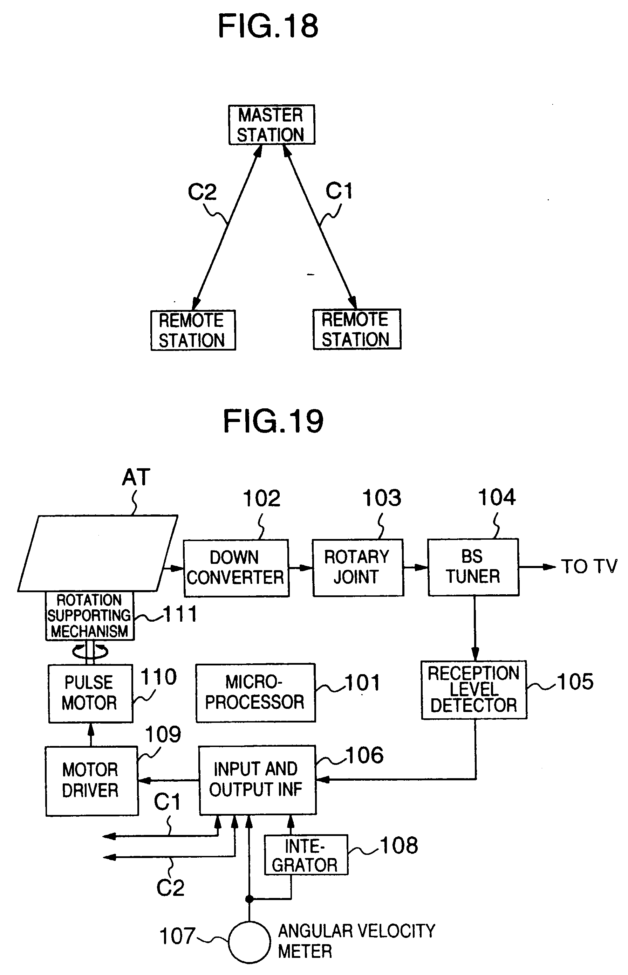

FIG. 18 is a conceptual diagram showing an arrangement of a mobile satellite communication system to which the present invention is applied. This system comprises three BS or CS broadcasting reception satellite broadcasting reception apparatus and cables C1, C2 for connecting them. Of the three satellite broadcasting reception apparatus, one satellite broadcasting reception apparatus is designated as a master station and remaining two satellite broadcasting reception apparatus are designated as remote stations. The master station and the remote stations are connected via the cables C1, C2.

As shown in a block diagram of FIG. 19, the master station comprises a satellite broadcasting reception antenna AT, a microprocessor 101, a down-converter 102, a rotary joint, a BS tuner, a reception level detector 105, an input and output interface unit 106, an angular velocity meter 107, an integrator 108, a motor driver 109, a pulse motor 110, and a rotary supporting mechanism 111. The cables C1, C2 which connect the master station to the remote stations are led out from the input and output interface unit 106. The respective remote stations are configured in exactly the same manner as the master station.

When the radio tracking is carried out, in order to execute a variety of controls in response to reception levels which change hour to hour, there are defined several threshold values with respect to the reception levels. As shown in FIG. 4, these threshold values are defined as the ratios (relative values) relative to the peak value Lp. The peak value Lp is the maximum value of several latest reception levels detected by a microprocessor not shown. This peak value is updated each time a new reception level which exceeds a threshold value Lo (e.g. value of 110% of the peak value) by a predetermined magnification ratio is detected. As described above, the reason that a hysteresis of 10% is set each time the peak value is updated is to eliminate a useless processing for frequently changing the peak value as the reception level is fluctuated in a short period of time.

A threshold value Lt is a value (e.g. value of 93%) which is a little lower than the peak value Lp. As far as the reception level is greater than this threshold value Lt, the tracking accuracy is not updated by rotating the antenna. A threshold value Lb is a considerably small value (e.g. value of 20%) as compared with the peak value. When the reception level becomes lower than this threshold value Lb, it is regarded that a large angular error occurred. In this case, the microprocessor starts the execution of the sweeping control for searching the satellite direction by changing the antenna azimuth angle within 360° at maximum. A threshold value Lm is an approximately intermediate value (e.g. a value of 50%) between the peak value Lp and the threshold value Lb. The meaning of this threshold value Lm will be described later on.

The microprocessor 101 executes a variety of controls such as differentiation control, hold control, weight control or wiper control based on a relationship of magnitudes among the reception level of radio waves received at the antenna AT and the above-mentioned various threshold values, a relationship of magnitudes among the angular velocity detected by the angular velocity meter 107, its integrated value and the respective threshold values or a relationship of magnitudes among duration and the threshold values. With respect to these controls, there will be referred to Japanese laid-open patent publication (JP-A-7-283641) of Japanese patent application previously filed by the present applicant.

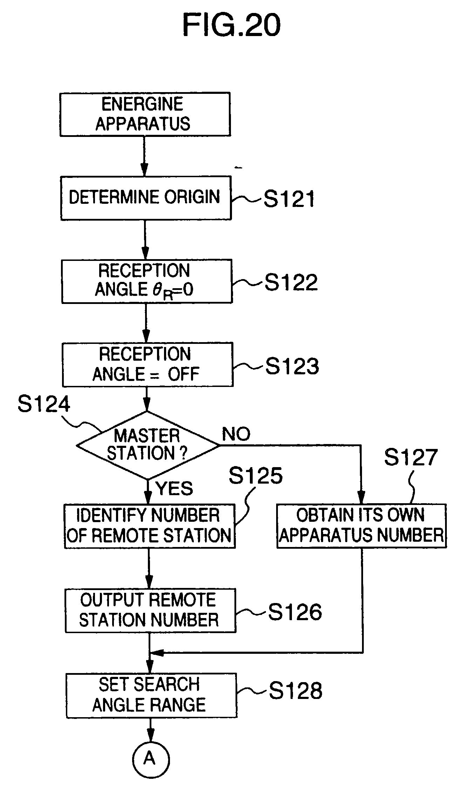

FIG. 20 is a flowchart used to explain a procedure of an initialization processing which is executed by the master station and the remote stations when the apparatus is energized. When the apparatus is energized to start the operation, initially, the master station and the remote stations determine an origin for causing the reception antenna to stand still at a predetermined origin position by utilizing a combination of a photo-coupler and a shielding material (step S121), sets a reception angle θR of this time to zero (step S122). Then, in order to indicate its own radio tracking state that the radio tracking state does not yet reach the satisfactory state, the apparatus sets its own reception signal to the OFF state (step S123), and determines whether the apparatus is set to either the master station or the remote station (S124). The setting of the master station and the remote station is executed in a hardware fashion such as a switching operation of a micro-switch when this satellite broadcasting reception system is installed.

If it is determined at the step S124 by the master station that the apparatus is set to the master station, then the master station identifies the number of the remote stations based on the number of the input and output ports to which the cables C1, C2 of the input and output interface unit 106 are connected (step S125), sets the same remote station numbers as those of the serial numbers of the input and output ports to the remote stations, and transmits the remote station numbers to the corresponding remote stations (step S126). If it is determined at the step S124 by the remote station that its own apparatus is set to the remote station, then the remote station obtains and saves its own number that is transmitted by the master station at the step S125 (step S127).

Subsequently, the master station calculates a range of search angle (in this example, 120°) that should be allotted by the respective remote stations by equally dividing the whole search range of 360° with the whole number (in this example, three) of the master station and the remote stations, and sets the calculated search range to its own apparatus (master station) and the two remote stations. For example, 0° ± 60° is set to the master station, 120° ± 60° is set to one remote station, and -120° ± 60° is set to the other remote station as the search angle ranges, respectively.

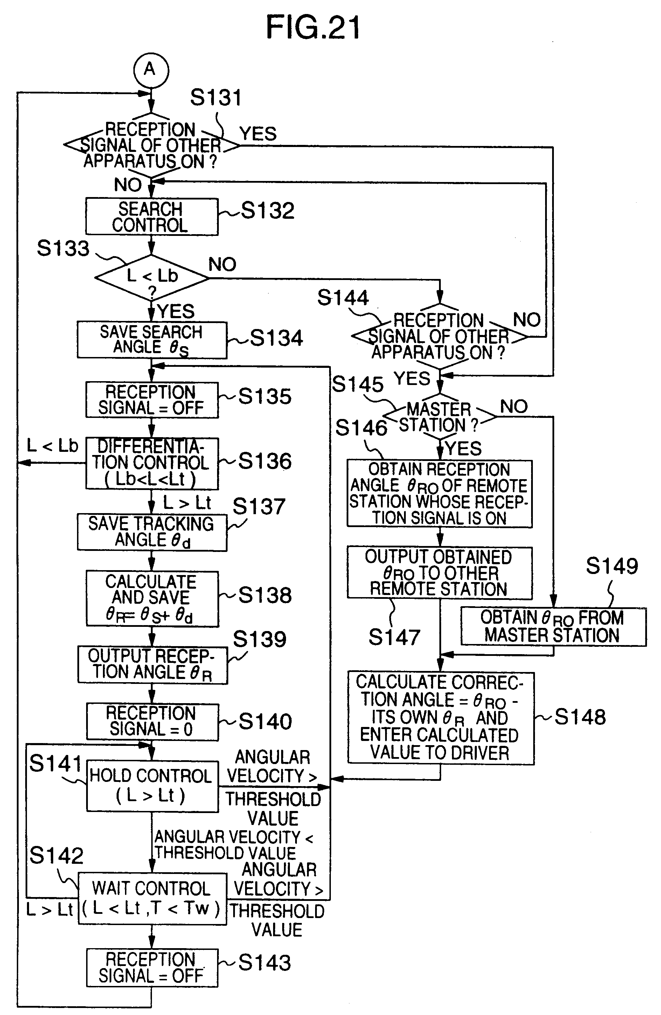

After the initialization in the above-mentioned master station and the remote station is ended, as shown in a flowchart of FIG. 21, it is determined by the ON/OFF of reception signals of other apparatus whether or not other apparatus is placed in the satisfactory radio tracking state (step S131). If they are not ON, then the master station and the remote station start their own search control (step S132). This search control is the same control as that disclosed as the sweeping control in the above-mentioned JP-A-7-283641 and is the control in which the antenna angle is being vibrated about the value of the present time by increasing the amplitude at the same time the reception level is detected.

However, as mentioned before, since the value which results from equally dividing the search angle range of 360° in total is each distributed in the master station and the two remote stations, the master station executes the search control in a range of ±60° around the angle of the present time, i.e. the angle 0° of the origin position, one remote station executes the search control in a range of ±60° around the angle of the present time, i.e. an angle deviated by 120° from the angle 0° of the origin position, and the other remote station executes the search control in a range of ±60°C around the angle of the present time, i.e. an angle deviated by -120° from the angle 0° of the origin position. As described above, since the search range is allotted to the three apparatus, a time necessary for search can be reduced to 1/3 at maximum to thereby increase a correspondence property and a power consumption and a wear of mechanism can be reduced.

If it is determined by the master station or the remote station that the reception level exceeds the predetermined threshold value Lb during the search control (step S133), then the master station or the remote station saves the angle of this detection time as a search angle $\theta$s (step S134), turns off the reception signal in order to indicate its own radio tracking state that the radio tracking state does not yet reach the satisfactory state (step S135), and starts the execution of the differentiation control (step S136).

This differentiation control is the same as that disclosed as the differentiation control in the above-mentioned JP-A-7-283641, and is the control in which the antenna is rotated at a larger rotation velocity as the increased velocity of the reception level is large until the reception level L exceeds the threshold value Lt (> Lb). Incidentally, if the reception level becomes less than the threshold value Lb during this differentiation control, then control goes back to the step S131, and the above-mentioned processing is repeated from this step.

When the above-mentioned differentiation control is ended, a difference between the antenna angle obtained at the time the differentiation control is ended and the search angle is saved as a tracking angle $\theta$d (step S137). Subsequently, an antenna angle $\theta_R$ is calculated by the addition of the search angle $\theta$s and a tracking angle $\theta$d and then saved (step S138). Then, the reception angle $\theta_R$ is output to a motor driver which drives the antenna and other apparatus (step S139), and the reception signal indicating that the master station or the remote station goes to the radio tracking satisfactory state is turned ON (step S140). Control then goes to the hold control (step S141).

This hold control is the same as that disclosed as the hold control in the above-mentioned JP-A-7-283641. Specifically, this hold control is a processing for repeating an operation for updating the peak value of the reception level and an operation for updating the threshold values Lb, Lt defined in the form % value relative to this peak value as far as the reception level is greater than the threshold value Lt. Incidentally, during this hold control is executed, the antenna angle is not changed. That is, the antenna is kept in the stationary state under the condition that it is directed in the satellite direction. This state is referred to as a radio tracking satisfactory state. Then, in this radio tracking satisfactory state, the reception signal is kept in the ON state.

If the reception level becomes lower than the threshold value Lt during the hold control, then control goes to a variety of control states in order to cope with various events estimated as causes for lowering the reception level in response to the acceleration of this time and the detected result of its integrated value. That is, if an acceleration detected when the reception level is lowered and its time integrated value exceeds a predetermined threshold value, then it is regarded that the cause of the decrease of the reception level is based on the change of the course of the vehicle. Then, the differentiation control of the step S136 is resumed through the step S135.

On the other hand, if the acceleration detected when the reception level becomes lower than the threshold value Lt and its time integrated value also are less than the predetermined threshold value, then it is regarded that the cause of the decrease of the reception level is not based on the change of the course of the vehicle but is based on the appearance of any shielding material, and control goes to a weight control (step S142). This weight control is the same as that disclosed as the weight control in the above-mentioned JP-A-7-283641 in which the recovery of the reception level is waited over a predetermined time.

If the reception level is recovered during the weight control is executed in the above-mentioned step S142, then control goes back to the step S141 whereat the hold control is resumed. If the acceleration exceeds the threshold value during this weight control is executed, it is regarded that the reception level is lowered not only by the shielding but also by the change of the course of the vehicle, and control goes back through the step S135 to the step S136, whereat the differentiation control is resumed. If the reception level is not recovered within a predetermined period Tw, the a reception signal indicating that the radio tracking state is unsatisfactory is turned OFF (step S143), and control goes back to the step S131.

If it is determined by the master station or the remote station at the step S131 that the reception signal of other apparatus is in the ON state, then control goes to a step S145, whereat it is determined by the master station or the remote station that its own apparatus is set in either the master station or the remote station (step S144). If its own apparatus is set in the master station, then the master station obtains a reception angle $\theta_{RO}$ that is output at the step S140 from the remote station in which the reception signal is in the ON state, i.e. the radio tracking state is satisfactory from the remote station (step S147), and outputs the thus obtained reception angle $\theta_{RO}$ to other remote station (step S147).

On the other hand, the remote station obtains a reception angle $\theta_{RO}$ of other remote station that is output by the master station at the step S140 or the step S147 (step S149).

The master station or other remote station which obtains the reception angle $\theta_{RO}$ from the remote station whose radio tracking state is satisfactory calculates a difference between $\theta_{RO}$ and the reception angle $\theta_R$ of its own apparatus as a correction angle, and outputs the correction angle to the motor driver to thereby change the antenna angle of its own apparatus (step S148). Then, the master station or the remote station goes through the step S135 to the step S136, whereat the execution of the differentiation control is started.

Incidentally, in the step S148, the reception angle of its own apparatus is made coincident with the reception angle of other apparatus which is placed in the radio tracking satisfactory state, and control may directly go to the hold control of the step S141 from the step S148 through the step S139. In the example of FIG. 21, in order to absorb an angular error between the respective satellite broadcasting reception apparatus, the differentiation control of the step S136 is executed before control goes to the hold control of the step S141. Accordingly, the tracking angle saved at the step S137 corresponds to the displacement amount of the antenna angles between the respective apparatus. Therefore, it is possible to detect the displacement amount of the antenna angles between the respective apparatus by monitoring the tracking angle $\theta d$ saved at the step S137 through the step S148.

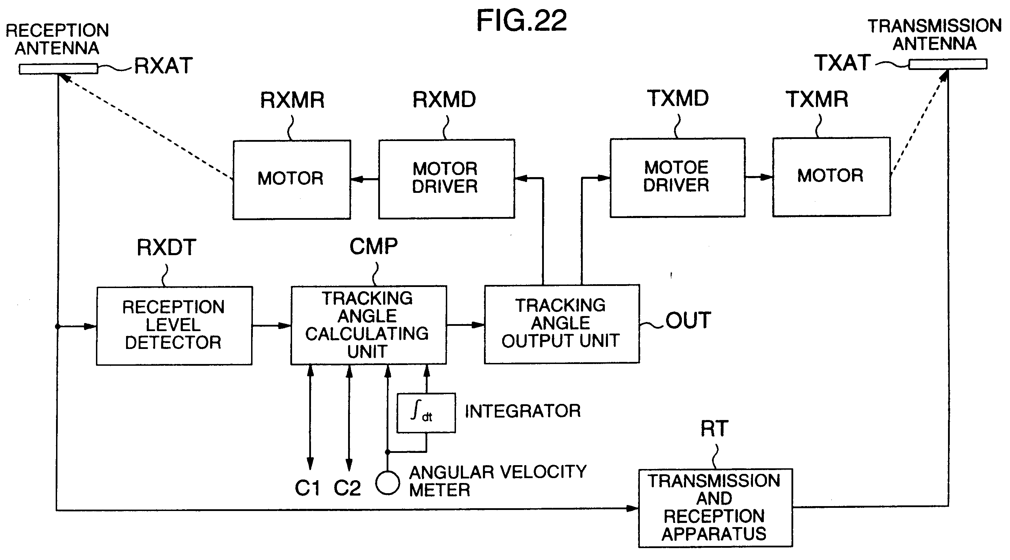

FIG. 22 is a block diagram representing the arrangement of each apparatus of a master station when the master station and the remote stations within the reception system of FIG. 18 are the satellite communication apparatus for effecting the transmission and the reception between them and the satellite. In this satellite communication system, a reception antenna RXAT based on a leakage waveguide planar array antenna having a tilt angle of an elevation angle and a transmission antenna TXAT are installed separately, and connected to a transmission and reception apparatus RT.

An antenna angle control system on the reception side forms a closed-loop which comprises the reception antenna TXAT, a reception level detection unit RXDT, a tracking angle calculating unit CMP, a tracking angle output unit OUT, a motor driver RXMD on the reception side, and a motor RXMR on the reception side. The tracking angle calculating unit CMP within the closed-loop executes exactly the same radio tracking as that of the master station of the satellite broadcasting reception apparatus of the above-mentioned satellite broadcasting reception system.

On the other hand, an antenna angle control on the transmission side forms an open-loop which comprises the output unit OUT common to the tracking angle output unit of the reception system, a motor driver TXMD on the transmission side, a motor TXMR on the transmission side, and a transmission antenna TXAT. Then, an angle change command which is output from the tracking angle output unit OUT to the transmission side is issued in such a manner that the angle of the transmission antenna agrees with the angle of the reception angle as far as the radio tracking based on the reception antenna is placed in the satisfactory state, i.e. an angle of the reception antenna is kept at a constant value.

The present invention has been described so far in the case of the satellite communication system which comprises the satellite broadcasting reception system composed of a plurality of satellite broadcasting reception apparatus which receive radio waves of a broadcasting satellite or the like and a plurality of satellite communication apparatus for transmitting and receiving data between them and the communication satellite. However, the present invention can be applied to a system having respective apparatus mixed therein, i.e. a system in which a satellite broadcasting reception apparatus for receiving radio waves of a broadcasting satellite and a satellite communication apparatus for transmitting and receiving data between it and the communication satellite are placed in the mixed state. In this case, by adding and subtracting antenna angle differences caused due to differences of longitudes of the broadcasting satellite and the communication satellite on the geostationary satellite orbit, a radio tracking control of a corresponding satellite based on the mixed apparatus may be executed.

Since the mobile satellite communication system to which the present invention is applied receives angle information concerning an antenna angle from other satellite communication apparatus whose radio tracking state is satisfactory when the radio tracking state of the antenna becomes unsatisfactory in each satellite communication apparatus of a space diversity type and corrects an antenna angle of its own apparatus based on the thus received angle information, a useless tracking operation within each apparatus can be removed, a wear of tracking mechanism and a power consumption can be reduced considerably.

As described above in detail, in the satellite communication apparatus for a movable body according to the present invention, since the reception antenna apparatus and the transmission antenna apparatus are completely made independent mechanically, the reception antenna apparatus and the transmission antenna apparatus may be separately installed on the roof of a large bus so as to avoid existing constructions such as a ventilator formed on the roof. In the case of a small car, one of the reception antenna apparatus and the transmission antenna apparatus may be disposed on the roof and the other may be disposed within the cabin or trunk separately.

Further, since the reception antenna and the transmission antenna are housed in a specially-designed radome, the optimum layout between the antenna body and the radome can be realized independently for the receiving and transmitting frequency ranges which may differ by 10 GHz, and a sensitivity of the antenna including the radome can be increased.

INDUSTRIAL APPLICABILITY

The present invention is useful when the satellite communication apparatus for a vehicle mounted on a movable body such as a vehicle, which apparatus transmits and receives a signal between it and the satellite under the automatic tracking state for the satellite, is miniaturized, inexpensively produced and enhanced in performance.

**Claims**

1.  A satellite communication apparatus to be mounted on a movable body and for transmitting and receiving a signal between said apparatus and a satellite by automatically tracking said satellite, said satellite communication apparatus comprising:

    a movable reception antenna for receiving a signal from said satellite;
    a movable transmission antenna for transmitting a signal to said satellite, said transmission antenna being separated from said reception antenna;
    first control means for controlling a direction of said reception antenna by using a closed-loop so as to track a signal transmitted from said satellite; and
    second control means for controlling a direction of said transmission antenna by using an open-loop so as to track the direction of said reception antenna.

2.  A satellite communication apparatus to be mounted on a movable body and for transmitting and receiving a signal between said apparatus and a satellite by automatically tracking said satellite, said satellite communication apparatus comprising:

    a movable reception antenna for receiving a signal from said satellite;
    a movable transmission antenna for transmitting a signal to said satellite, said transmission antenna being separated from said reception antenna;
    a reception angle changing unit for changing an angle of said reception antenna;
    a transmission angle changing unit for changing an angle of said transmission antenna; and
    an automatic tracking unit for detecting a level of a signal received by said reception antenna, commanding a changed angle for increasing the detected level to said reception angle changing unit and commanding the same changed angle as the changed angle commanded to said reception angle changing unit to said transmission angle changing unit.

3.  A satellite communication apparatus as claimed in claim 2, wherein:

    said reception antenna and said reception angle changing unit are unitarily mounted on a first housing member, and
    said transmission antenna and said transmission angle changing unit are unitarily mounted on a second housing member.

4.  A satellite communication apparatus as claimed in claim 2, wherein:

    each of said reception antenna and said transmission antenna includes a leakage waveguide slot array antenna having a tilt angle in an elevation angle direction, and
    said reception angle changing unit and said transmission angle changing unit respectively change angles of said reception antenna and said transmission antenna in a substantially horizontal plane, respectively.

5.  A satellite communication apparatus as claimed in claim 2, wherein:

    said automatic tracking unit detects a level of a received signal with respect to a pilot signal having a predetermined frequency.

6.  A satellite communication apparatus as claimed in claim 5, wherein:

    a level of said pilot signal is set to be lower than a level of a signal used in communication; and
    said automatic tracking unit converts said pilot signal into a pilot signal having a low frequency by executing a plurality of frequency-conversions and detects the level of the received signal with respect to said pilot signal having the low frequency.

7.  A satellite communication apparatus as claimed in claim 2, wherein said automatic tracking unit includes:

    a first detector for detecting whether or not an angle of said reception antenna agrees with a predetermined angle;
    a second detector for detecting whether or not an angle of said transmission antenna agrees with a predetermined angle; and
    means for correcting a difference between the angle of said reception antenna and the angle of said transmission antenna when selected one of the angle of said reception antenna and the angle of said transmission antenna agrees with said predetermined angle.

8. A satellite communication apparatus as claimed in claim 1, wherein:

said second control means controls the direction of said transmission antenna by using an open-loop so as to track the direction of said reception antenna only when a tracking state of said reception antenna is satisfactory, and fixes the direction of said transmission antenna when the tracking state of said reception antenna is not satisfactory.

9. A satellite communication apparatus as claimed in claim 2, wherein:

said automatic tracking unit commands the same changed angle as the changed angle commanded to said reception angle changing unit to said transmission angle changing unit only when the tracking state of said reception antenna is satisfactory.

10. A satellite communication apparatus as claimed in claim 8, wherein:

the tracking state of said reception antenna is judged by determining whether or not said reception antenna is in a substantially stationary state directing to a direction of said satellite.

11. A satellite communication apparatus as claimed in claim 9, wherein:

the tracking state of said reception antenna is judged by determining whether or not said reception antenna is in a substantially stationary state directing to a direction of said satellite.

12. A satellite communication apparatus as claimed in claim 9, wherein:

said reception antenna and said reception angle changing unit are unitarily mounted on a first housing member, and said transmission antenna and said transmission angle changing unit are unitarily mounted on a second member.

13. A satellite communication apparatus as claimed in claim 9, wherein:

each of said reception antenna and said transmission antenna includes a leakage waveguide slot array antenna having a tilt angle in an elevation direction; and

said reception angle changing unit and said transmission angle changing unit change angles of said reception antenna and said transmission antenna in a substantially horizontal plane, respectively.

14. A satellite communication apparatus as claimed in claim 9, wherein:

said automatic tracking unit detects a level of the received signal with respect to a pilot signal having a predetermined frequency.

15. A satellite communication apparatus as claimed in claim 14, wherein:

a level of said pilot signal is set to be lower than a level of a signal used in communication; and said automatic tracking unit converts said pilot signal into a pilot signal having a low frequency by executing a plurality of frequency-conversions and detects the level of the received signal with respect to said pilot signal having the low frequency.

16. A satellite communication apparatus as claimed in claim 9, wherein: said automatic tracking unit includes:

a first detector for detecting whether or not an angle of said reception antenna agrees with a predetermined angle;
a second detector for detecting whether or not an angle of said transmission antenna agrees with said predetermined angle; and
means for correcting a difference between the angle of said reception antenna and the angle of said transmission antenna when selected one of the angle of said reception antenna and the angle of said transmission antenna agrees with said predetermined angle.

# FIG.1

RECEPTION ANTENNA — RXAT

RXMR — MOTOR

RXMD — MOTOR DRIVER

TXMD — MOTOR DRIVER

TXMR — MOTOR

TRANSMISSION ANTENNA — TXAT

RXDT — RECEPTION LEVEL DETECTING UNIT

CMP — TRACKING ANGLE CALCULATING UNIT

TRACKING ANGLE OUTPUT UNIT — OUT

EP 0 829 919 A1

FIG.2

RADOME 12

RECEPTION ANTENNA 11

ORIGIN SENSOR 15

RECEPTION MOTOR 13

RECEPTION MOTOR DRIVER 14

CPU 30

TO 16  TO 24

EXTENDED I/O 34

DISPLAY PANEL 35

INPUT I/F 31

EARTH MAGNETIC SENSOR 33

GYRO SENSOR 32

DETECTOR 19

MIX 18c

MIX 18b

MIX 18a

LO 17c

LO 17b

LO 17a

PLL OSCILLATOR 16

FROM 30

TRANSMISSION ANTENNA 21

RADOME 22

ORIGIN SENSOR 25

ROTARY JOINT 50

TRANSMISSION MOTOR 23

TRANSMISSION MOTOR DRIVER 24

FROM 30

LARGE ELECTRIC POWER AMPLIFIER 49

TRANSMISSION LOCAL OSCILLATOR 47

MIX 48

TRANSMISSION SIGNAL

REFERENCE SIGNAL OSCILLATOR 46

10MHz

IGHz

TRANSMISSION AND RECEPTION SIGNAL PROCESSING UNIT 40

RECEPTION SIGNAL

IGHz

LNA 41

BIAS DETECTOR 42

ROTARY JOINT 43

MIX 44

RECEPTION LOCAL OSCILLATOR 45

20

# FIG.3

# FIG.4

LEVEL
(RELATIVE VALUE)

Lo — 110%
Lp — 100%
Lt — 93%
Lm — 50%
Lb — 20%
0%

ANGLE ERROR OF ANTENNA

EP 0 829 919 A1

FIG.5

```
        ┌──────────────────────┐
        │   DIFFERENTIATION    │
        │      CONTROL         │
        └──────────┬───────────┘
                   │
S11                ▼
          ╱─────────────────╲
         ╱   ROTATION         ╲   NO
        ╱    DIRECTION         ╲──────────┐
        ╲    DETERMINED        ╱          │
         ╲      ?             ╱           ▼
          ╲─────────────────╱      ┌──────────────────┐
                   │ YES          │ DETERMINE ROTATION │──S12
                   │              │   DIRECTION        │
                   │              └─────────┬──────────┘
                   │◄───────────────────────┘
                   ▼
        ┌──────────────────────┐
        │ SET INITIAL VALUE Vo TO │──S13
        │ ROTATION VELOCITY V     │
        └──────────┬───────────┘
                   │
          ┌────────▼─────────┐
          │ ROTATE ANTENNA BY Δθ AT │──S14
          │ ROTATION VELOCITY V     │
          └────────┬─────────┘
                   ▼
          ┌──────────────────┐
          │ DETECT RECEPTION LEVEL L AND │──S15
          │ ITS INCREASED AMOUNT ΔL      │
          └────────┬─────────┘
S16                ▼
          ╱─────────────────╲   NO
         ╱    L > Lb ?       ╲──────────┐
          ╲─────────────────╱           │
                   │ YES                │
                   ▼                    │
          ┌──────────────────┐          │
          │ CHANGE ROTATION VELOCITY │──S17│
          │ SO THAT V ∝ ΔL           │    │
          └────────┬─────────┘          │
   NO              ▼          S18        │
  ◄──────╱─────────────────╲            │
         ╲    L > Lt ?       ╱           │
          ╲─────────────────╱            │
                   │ YES                 │
   NO              ▼          S19         │
  ◄──────╱─────────────────╲            │
         ╲    V < Vth ?      ╱           │
          ╲─────────────────╱            │
                   │ YES                 │
                   ▼                     ▼
        ┌──────────────┐      ┌──────────────────┐
        │ HOLD CONTROL │      │ SWEEPING CONTROL │
        └──────────────┘      └──────────────────┘
```

22

# FIG.6

```
        ┌──────────────────┐
        │   HOLD CONTROL   │
        └──────────────────┘
                 │
                 ▼
   ┌───────────────────────────────┐
   │  SET IMMEDIATELY-PRECEDING    │
   │  RECEPTION LEVEL TO PEAK      │── S21
   │  VALUE Lp AND CALCULATE Lb,Lt ,ETC. │
   └───────────────────────────────┘
                 │
                 ▼
   ┌───────────────────────────────┐
   │   DETECT RECEPTION LEVEL L    │── S22
   └───────────────────────────────┘
                 │
S23              ▼
          ╱─────────────╲        NO
         ╱   L > Lt ?    ╲──────────►
          ╲─────────────╱
                 │ YES
                 ▼        S24
          ╱─────────────╲
   NO    ╱   L > Lo ?    ╲
  ◄──────╲─────────────╱
                 │ YES
```

S25
ANGULAR VELOCITY > THRESHOLD VALUE ? — YES

NO

S26
INTEGRATED VALUE > THRESHOLD VALUE ? — YES

NO

WEIGHT CONTROL

DIFFERENTIATION CONTROL

23

# FIG.7

WEIGHT CONTROL

S31
INITIALIZE TIME T AND STATE FLAG F TO ZERO

S32
ANGULAR VELOCITY < > THRESHOLD VALUE ? — YES

NO

S33
DETECT RECEPTION LEVEL L

S34
$L > Lt$ ? — YES

NO

S35
$T > Tm$ ? — NO

YES

PRECEDING WEIGHT CONTROL

S36
ANGULAR VELOCITY < > THRESHOLD VALUE ? — YES

NO

DIFFERENTIATION CONTROL

S37
DETECT RECEPTION LEVEL L

S38
$L > Lt$ ? — YES

HOLD CONTROL

NO

S39
$L > Lm$ ? — YES

NO

S40
$F = 0$

S41
$T > Tw$ ? — NO

YES

SWEEPING CONTROL

S42
$F = 1$ ? — NO

YES

S43
$F = 1$

S44
$T = nTo$ ? — NO / YES

SUCCEEDING WEIGHT CONTROL

24

# FIG.8

SWEEPING CONTROL

S51 — SEARCH RECEPTION LEVEL IN RANGE OF ±5° AND L > Lb ? — YES

NO

S52 — SEARCH RECEPTION LEVEL IN RANGE OF ±20° AND L > Lb ? — YES

NO

S53 — SEARCH RECEPTION LEVEL IN RANGE OF ±90° AND L > Lb ? — YES

NO

ENERGIZE APPARATUS

S54 — SEARCH RECEPTION LEVEL IN ROTATION RANGE OF ±360° AND L > Lb ? — YES

NO

S55 — SAVE ROTATION DIRECTION

DIFFERENTIATION CONTROL

# FIG.9

```
        ┌──────────────────┐
        │    ENERGIZE      │
        │   APPARATUS      │
        └────────┬─────────┘
                 │
        ┌────────▼──────────────────────┐
        │ RX FLAG = ON, TX FLAG = OFF   │───S81
        └────────┬──────────────────────┘
                 │
        ┌────────▼──────────────────────┐
        │ RX ORIGIN DETERMINING          │───S82
        │ PROCESS                        │
        └────────┬──────────────────────┘
                 │
        ┌────────▼──────────────────────┐
        │ RX FLAG = OFF, TX FLAG = ON   │───S83
        └────────┬──────────────────────┘
                 │
        ┌────────▼──────────────────────┐
        │ TX ORIGIN DETERMINING          │───S84
        │ PROCESS                        │
        └────────┬──────────────────────┘
                 │
        ┌────────▼──────────────────────┐
        │ RX FLAG = ON, TX FLAG = ON    │───S85
        └────────┬──────────────────────┘
                 │
        ┌────────▼──────────────────────┐
        │    SWEEPING CONTROL            │───S86
        │        L<Lb                    │
        └────────┬──────────────────────┘
              L>Lb
        ┌────────▼──────────────────────┐
 L<Lb   │    DIFFERENTIATION             │───S87
◄───────│    CONTROL                     │
        │    Lb<L<Lt                     │
        └────────┬──────────────────────┘
              L>Lt
              V<Vth
        ┌────────▼──────────────────────┐   ANGULAR VELOCITY
        │    HOLD CONTROL                │   > THRESHOLD VALUE
        │        L>Lt                    │───────────────────►
        └────────┬──────────────────────┘───S88
         INTEGRATED VALUE OF                 ANGULAR
         ANGULAR VELOCITY                    VELOCITY
              < THRESHOLD VALUE              > THRESHOLD
        ┌────────▼──────────────────────┐    VALUE
 L>Lt   │    WEIGHT CONTROL              │
        │    L<Lt、 T<Tw                 │───S89
        └────────┬──────────────────────┘
              T>Tw
```

# FIG.10

```
        ┌─────────────────────┐
        │   OUTPUT PROCESS     │
        └─────────────────────┘
                  │
                  ▼
S91          ╱─────────╲                NO
          ╱   RX FLAG = ON  ╲─────────────┐
          ╲       ?       ╱               │
            ╲─────────╱                   │
                  │ YES                    │
                  ▼                        │
S92   ┌─────────────────────────┐         │
      │ OUTPUT RX CHANGED ANGLE │         │
      └─────────────────────────┘         │
                  │◄──────────────────────┘
                  ▼
S93          ╱─────────╲                NO
          ╱   TX FLAG = ON  ╲─────────────┐
          ╲       ?       ╱               │
            ╲─────────╱                   │
                  │ YES                    │
                  ▼                        │
S94   ┌─────────────────────────┐         │
      │ OUTPUT TX CHANGED ANGLE │         │
      └─────────────────────────┘         │
                  │◄──────────────────────┘
                  ▼
            ┌──────────┐
            │   END    │
            └──────────┘
```

# FIG.11

```
          ┌──────────────────┐
          │    ENERGIZE      │
          │   APPARATUS      │
          └──────────────────┘
                   │
                   ▼
          ┌──────────────────┐
          │ DETERMINE ORIGIN │~S101
          │  OF RX ANTENNA   │
          └──────────────────┘
                   │
                   ▼
          ┌──────────────────┐
          │ RX ANTENNA ANGLE │~S102
          │   θ_R = 0        │
          └──────────────────┘
                   │
                   ▼
          ┌──────────────────┐
          │   RECEPTION      │~S103
          │  SIGNAL = OFF    │
          └──────────────────┘
                   │
                   ▼
          ┌──────────────────┐
          │ SWEEPING CONTROL │~S104
          │   ( L < Lb )     │
          └──────────────────┘
                   │  L > Lb
                   ▼
          ┌──────────────────┐
          │ SAVE SEARCH ANGLE θ_S │~S105
          └──────────────────┘
```

$\theta_R = 0$

$\theta_R = \theta_S + \theta_d$

S99 — RECEPTION SIGNAL = OFF

DIFFERENTITATION CONTROL ( Lb < L < Lt ) ~S106

L < Lb

L > Lt     V < Vth

SAVE TRACKING ANGLE $\theta_d$ ~S107

RECEPTION SIGNAL = ON ~S108

CALCULATE AND SAVE $\theta_R = \theta_S + \theta_d$ ~S109

HOLD CONTROL ( L > Lt ) ~S110

ANGULAR VELOCITY > THRESHOLD VALUE

INTEGRATED VALUE OF ANGULAR VELOCITY > THRESHOLD VALUE

ANGULAR VELOCITY > THRESHOLD VALUE

L > Lt

WEIGHT CONTROL ( L < Lt , T < Tw ) ~S100

T > Tw

## FIG.12

```
┌─────────────────────────────────┐
│       ENERGIZE APPARATUS         │
└─────────────────────────────────┘
                │
                ▼
┌─────────────────────────────────┐
│  DETERMINE ORIGIN OF TX ANTENNA  │──── S111
└─────────────────────────────────┘
                │
                ▼
┌─────────────────────────────────┐
│  TX ANTENNA ANGLE $\theta_T = 0$ │──── S112
└─────────────────────────────────┘
                │
                ▼
        ◇─────────────────◇
  NO ◄──┤ RECEPTION SIGNAL = ON  ├──── S113
        │        ?        │
        ◇─────────────────◇
                │ YES
                ▼
┌─────────────────────────────────┐
│      CALCULATE ANTENNA           │
│      ANGULAR DIFFERENCE          │──── S114
│  $\delta\theta_T = \theta_T - \theta_R$  │
└─────────────────────────────────┘
                │
                ▼
        ◇─────────────────◇
 YES ◄──┤  $|\delta\theta_T| \leq$  ├──── S115
        │  THRESHOLD VALUE  │
        │        ?        │
        ◇─────────────────◇
                │ NO
                ▼
┌─────────────────────────────────┐
│   CHANGE $\theta_T$ SO AS TO      │
│   DECREASE $|\delta\theta_T|$     │──── S116
└─────────────────────────────────┘
```

## FIG.13

DIRECTION OF ANTENNA

DIRECTION OF VEHICLE

TURNING ANGLE

$\theta$

$\theta$

VEHICLE

ANTENNA BODY

# FIG.14

TRACKING-DISABLED
STATE OCCURRES

(A) ANGULAR
VELOCITY

(B) INTEGRATED
VALUE OF
ANGULAR
VELOCITY

$\theta_0$

(C) CENTER VALUE
OF TRACKING
AZIMUTH ANGLE

$\theta_0$

360°

(D) SWEEPING ANGLE
AMPLITUDE
$(\Delta \theta_i)$

$T_1$ $T_2$ $T_3$ $T_4$

(E) SWEEPING SPEED
(Vi)

30

# FIG.15

```
         ( SEARCH MODE )
                │
                ▼
        ┌────────────────┐
        │  RESET TIMER   │──── S61
        └────────────────┘
                │
                ▼
   ┌──────────────────────────┐
   │ READ DIRECTION OF VEHICLE │──── S62
   │ AND CALCULATE TRACKING    │
   │ AZIMUTH ANGLE θ           │
   └──────────────────────────┘
```

S63

TIME OVER ? — YES → ( ENERGIZE APPARATUS )

NO

S64 — SET SWEEP ANGLE AMPLITUDE Δθ WHICH PROGRESSIVELY INCREASES WITH TIME, SWEEPING ANGLE Vi AND SWEEPING TIME Ti

S69 — ROTATE TRACKING AZIMUTH ANGLE BY 360° AND $L > Lb$ ? — NO

YES

S65 — SWEEP ANGULAR RANGE OF $\theta_o \pm \Delta\theta_i$ AT VELOCITY Vi

S66 — RECEPTION LEVEL $L > Lb$ ? — YES

NO

S67 — CORRECT AND UPDATE θ WITH CHANGED DIRECTION OF VEHICLE AFTER SETTING

S70 — SAVE TRACKING AZIMUTH ANGLE

S71 — MOVE TO TRACKING MODE IN WHICH RECEPTION LEVEL IS MAXIMIZED

S68 — SWEEPING TIME $\geqq Ti$ ? — NO / YES

# FIG.16
## PRIOR ART

# FIG.17
## PRIOR ART

# FIG.18

MASTER
STATION

C2          C1

REMOTE
STATION          REMOTE
STATION

# FIG.19

AT

| 102 | 103 | 104 |

DOWN
CONVERTER → ROTARY
JOINT → BS
TUNER → TO TV

ROTATION
SUPPORTING
MECHANISM ~111

PULSE
MOTOR ~110     MICRO-
PROCESSOR ~101     RECEPTION
LEVEL
DETECTOR ~105

MOTOR
DRIVER ~109     INPUT AND
OUTPUT INF ~106

C1

C2          INTE-
GRATOR ~108

107~  ANGULAR VELOCITY
METER

# FIG.20

```
        ┌─────────────────┐
        │    ENERGINE     │
        │    APPARATUS    │
        └────────┬────────┘
                 │
                 ▼
        ┌─────────────────┐
        │ DETERMINE ORIGIN│ ~S121
        └────────┬────────┘
                 │
                 ▼
        ┌─────────────────┐
        │    RECEPTION     │ ~S122
        │  ANGLE θ_R=0     │
        └────────┬────────┘
                 │
                 ▼
        ┌─────────────────┐
        │    RECEPTION     │ ~S123
        │  ANGLE = OFF     │
        └────────┬────────┘
```

$\theta_R = 0$

S124

```
              ╱╲
            ╱      ╲      NO
          ╱  MASTER  ╲ ──────────┐
          ╲ STATION ? ╱          │      S127
            ╲      ╱              │
              ╲╱                  │
              │ YES    S125       ▼
   ┌──────────────────┐   ┌──────────────────┐
   │ IDENTIFY NUMBER  │   │ OBTAIN ITS OWN    │
   │OF REMOTE STATION │   │APPARATUS NUMBER   │
   └────────┬─────────┘   └────────┬─────────┘
            │                      │
            ▼                      │
   ┌──────────────────┐            │
   │ OUTPUT REMOTE    │ ~S126      │
   │ STATION NUMBER   │            │
   └────────┬─────────┘            │
            │◄─────────────────────┘
            ▼
   ┌──────────────────┐
   │   SET SEARCH     │ ~S128
   │  ANGLE RANGE     │
   └────────┬─────────┘
            ▼
          ( A )
```

# FIG.21

(A)

S131
RECEPTION SIGNAL OF OTHER APPARATUS ON ? — YES

NO

SEARCH CONTROL — S132

S133
L < Lb ? — NO

YES

SAVE SEARCH ANGLE $\theta_S$ — S134

RECEPTION SIGNAL = OFF — S135

L < Lb

DIFFERENTIA-TION CONTROL (Lb<L<Lt) — S136

L > Lt

SAVE TRACKING ANGLE $\theta_d$ — S137

CALCULATE AND SAVE $\theta_R = \theta_S + \theta_d$ — S138

OUTPUT RECEP-TION ANGLE $\theta_R$ — S139

RECEPTION SIGNAL = 0 — S140

S141
HOLD CONTROL (L > Lt)

ANGULAR VELOCITY > THRESHOLD VALUE

ANGULAR VELOCITY < THRESHOLD VALUE

S142
WAIT CONTROL (L < Lt, T < Tw)

L > Lt

ANGULAR VELOCITY > THRESHOLD VALUE

RECEPTION SIGNAL = OFF — S143

S144
RECEPTION SIGNAL OF OTHER APPARATUS ON ? — NO

YES

S145
MASTER STATION ? — NO

S146 YES

OBTAIN RECEPTION ANGLE $\theta_{RO}$ OF REMOTE STATION WHOSE RECEP-TION SIGNAL IS ON

OUTPUT OBTAINED $\theta_{RO}$ TO OTHER REMOTE STATION

S147

S149

OBTAIN $\theta_{RO}$ FROM MASTER STATION

CALCULATE CORREC-TION ANGLE = $\theta_{RO}$ - ITS OWN $\theta_R$ AND ENTER CALCULATED VALUE TO DRIVER — S148

35

# FIG.22

RECEPTION ANTENNA ~RXAT

TRANSMISSION ANTENNA TXAT~

RXMR — MOTOR

RXMD — MOTOR DRIVER

TXMD — MOTOE DRIVER

TXMR — MOTOR

RXDT — RECEPTION LEVEL DETECTOR

CMP — TRACKING ANGLE CALCULATING UNIT

TRACKING ANGLE OUTPUT UNIT ~OUT

∫dt INTEGRATOR

C1 C2

◯ ANGULAR VELOCITY METER

RT — TRANSMISSION AND RECEPTION APPARATUS

EP 0 829 919 A1

## INTERNATIONAL SEARCH REPORT

| International application No. |
|---|
| PCT/JP96/01435 |

**A. CLASSIFICATION OF SUBJECT MATTER**

Int. Cl$^6$  H01Q3/08, H01Q13/12, H04B7/155, H04B7/08

According to International Patent Classification (IPC) or to both national classification and IPC

**B. FIELDS SEARCHED**

Minimum documentation searched (classification system followed by classification symbols)

Int. Cl$^6$  H01Q3/00-3/46, H04B7/14-7/22, H04B7/02-7/12, H04L1/02-1/06

Documentation searched other than minimum documentation to the extent that such documents are included in the fields searched

| | |
|---|---|
| Jitsuyo Shinan Koho | 1926 - 1996 |
| Kokai Jitsuyo Shinan Koho | 1971 - 1996 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 05-273325, A (Fujitsu Ltd.), October 22, 1993 (22. 10. 93), Page 2, column 2, line 28 to page 3, column 3, line 11; Fig. 4 (Family: none) | 1 |
| Y | | 2 - 5 |
| A | | 6 - 16 |
| X | JP, 62-170866, A (Mitsubishi Electric Corp.), July 27, 1987 (27. 07. 87), Page 1, lower right column, line 14 to page 2, upper left column, line 18; Fig. 3 (Family: none) | 1 |
| Y | | 2 - 5 |
| A | | 6 - 16 |
| Y | JP, 06-009216, U (Tokimec Inc.), February 4, 1994 (04. 02. 94), (Constitution) column; Figs. 1 to 11 (Family: none) | 3 |
| Y | JP, 07-106847, A (Nisshin Seitetsu K.K.), | 4 |

[X]  Further documents are listed in the continuation of Box C.  ☐  See patent family annex.

| | |
|---|---|
| *   Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier document but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| August 15, 1996 (15. 08. 96) | September 3, 1996 (03. 09. 96) |

| Name and mailing address of the ISA/ | Authorized officer |
|---|---|
| Japanese Patent Office | |
| Facsimile No. | Telephone No. |

Form PCT/ISA/210 (second sheet) (July 1992)

**INTERNATIONAL SEARCH REPORT**

International application No.

PCT/JP96/01435

| C (Continuation). DOCUMENTS CONSIDERED TO BE RELEVANT | | |
|---|---|---|
| Category* | Citation of document, with indication, where appropriate, of the relevant passages | Relevant to claim No. |
| | April 21, 1995 (21. 04. 95),<br>Page 4, column 5, lines 7 to 24<br>& TW, 225049, A & CA, 2111394, A | |
| P | JP, 07-283641, A (Nippon Steel Corp.),<br>October 27, 1995 (27. 10. 95),<br>Page 4, column 6, line 22 to page 5, column 7,<br>line 7; Figs. 1 to 9<br>& WO, 9520249, A & EP, 691039, A<br>& JP, 8116207, A | 2-7, 9,<br>11-16 |
| A | JP, 06-013810, A (NEC Corp.),<br>January 21, 1994 (21. 01. 94),<br>Page 2, column 2, line 6 to page 3, column 3,<br>line 6; Figs. 1 to 2 (Family: none) | 1 - 16 |

Form PCT/ISA/210 (continuation of second sheet) (July 1992)